# EUROPEAN PATENT APPLICATION

(11) **EP 4 546 857 A1**
(43) Date of publication of application: **30.04.2025**
(21) Application number: 22947230.3
(22) Date of filing: 21.06.2022
(51) Int. Cl.: H04W 24/10

(54) **REPORTING METHOD AND APPARATUS FOR TIMING ADVANCE REPORT**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/100243
(87) International publication number: WO 2023/245450

(57) **Abstract**

Embodiments of the present disclosure disclose a reporting method and apparatus for a timing advance report (TAR), which are applicable to the field of communication technology. The method performed by a terminal device comprises: sending a TAR to a network-side device; and determining that the TAR is successfully sent in response to receiving indication information sent by the network-side device, wherein the indication information is used for indicating that the network-side device receives the TAR. Therefore, the terminal device can determine whether the TAR is successfully sent, thereby preventing a scheduling delay of the network-side device.

## Description

### TECHNICAL FIELD

The present disclosure relates to the field of communication technologies, and in particular relates to a method and an apparatus for reporting a timing advance report (TAR).

### BACKGROUND

In mobile communication technologies, communication between a terminal device and a network side device may be performed through a satellite, but a round trip time (RTT) exists between the terminal device and the network side device.

In the related art, the terminal device may report a timing advance report (TAR) to the network side device, such that the network side device may determine the RTT between the terminal device and the network side device, and the network side device may determine an uplink scheduling timing or an uplink acknowledgement (ACK)/negative acknowledgement (NACK) feedback timing based on the RTT.

However, the terminal device may not determine whether the TAR is successfully reported, which is a problem that needs to be solved urgently.

### SUMMARY

Embodiments of the present disclosure provide a method and an apparatus for reporting a timing advance report (TAR), in which a terminal device may determine whether sending of the TAR is successful, thereby avoiding a scheduling delay of a network side device.

According to a first aspect of embodiments of the present disclosure, there is provided a method for reporting a timing advance report, performed by a terminal device, including: sending the timing advance report (TAR) to a network side device; and determining that sending of the TAR is successful in response to receiving indication information sent by the network side device, in which the indication information is configured to indicate that the network side device receives the TAR.

In the technical solution, the terminal device sends the timing advance report (TAR) to the network side device; it is determined that the sending of the TAR is successful in response to receiving the indication information sent by the network side device, in which the indication information is configured to indicate that the network side device receives the TAR. Therefore, the terminal device may determine whether the sending of the TAR is successful, thereby avoiding a scheduling delay of the network side device.

According to a second aspect of embodiments of the present disclosure, there is provided another method for reporting a timing advance report, performed by a network side device, including: receiving the timing advance report (TAR) sent by a terminal device; and sending indication information to the terminal device, in which the indication information is configured to indicate that the network side device receives the TAR.

According to a third aspect of embodiments of the present disclosure, there is provided a communication device that has some or all of the functions of the network side device for implementing the method of the first aspect. For example, the functions of the communication device may have the functions in some or all of embodiments of the present disclosure, or may have the function for implementing any one of embodiments of the present disclosure independently. The functions may be implemented by hardware, or may be implemented by hardware executing corresponding software. The hardware or software includes one or more units or modules corresponding to the functions described above.

In one implementation, the communication device may include in its structure a transceiver module and a processing module configured to support the communication device to perform the corresponding functions of the method described above. The transceiver module is configured to support communication between the communication device and other devices. The communication device may further include a storage module configured to couple with the transceiver module and the processing module, which stores computer programs and data necessary for the communication device.

In one implementation, the communication device includes: a transceiver module configured to send a timing advance report (TAR) to a network side device; and a processing module configured to determine that the sending of the TAR is successful in response to receiving indication information sent by the network side device, in which the indication information is configured to indicate that the network side device receives the TAR.

According to a fourth aspect of embodiments of the present disclosure, there is provided another communication device that has some or all of the functions of the terminal device for implementing examples of the method of the second aspect. For example, the functions of the communication device may have the functions in some or all of embodiments of the present disclosure, or may have the function for implementing any one of embodiments of the present disclosure independently. The functions may be implemented by hardware, or may be implemented by hardware executing corresponding software. The hardware or software includes one or more units or modules corresponding to the functions described above.

In one implementation, the communication device may include in its structure a transceiver module and a processing module configured to support the communication device to perform the corresponding functions of the method described above. The transceiver module is configured to support communication between the communication device and other devices. The communication device may further include a storage module configured to couple with the transceiver module and the processing module, which stores computer programs and data necessary for the communication device.

In one implementation, the communication device includes: a transceiver module configured to receive a timing advance report (TAR) sent by a terminal device; in which the transceiver module is further configured to send indication information to the terminal device, in which the indication information is configured to indicate that the network side device receives the TAR.

According to a fifth aspect of embodiments of the present disclosure, there is provided a communication device including a processor which, when invoking a computer program in a memory, performs the method of the first aspect described above.

According to a sixth aspect of embodiments of the present disclosure, there is provided a communication device including a processor which, when invoking a computer program in a memory, performs the method of the second aspect described above.

According to a seventh aspect of embodiments of the present disclosure, there is provided a communication device, including a processor and a memory, in which a computer program is stored in the memory, and the processor is configured to execute the computer program stored in the memory to cause the communication device to implement the method of the first aspect described above.

According to an eighth aspect of embodiments of the present disclosure, there is provided a communication device, including a processor and a memory, in which a computer program is stored in the memory, and the processor is configured to execute the computer program stored in the memory to cause the communication device to implement the method of the second aspect described above.

According to a ninth aspect of embodiments of the present disclosure, there is provided a communication device, including a processor and an interface circuit, in which the interface circuit is configured to receive code instructions and transmit the code instructions to the processor; and the processor is configured to execute the code instructions to cause the device to perform the method of the first aspect described above.

According to a tenth aspect of embodiments of the present disclosure, there is provided a communication device, including a processor and an interface circuit, in which the interface circuit is configured to receive code instructions and transmit the code instructions to the processor; and the processor is configured to execute the code instructions to cause the device to perform the method of the second aspect described above.

According to an eleventh aspect of embodiments of the present disclosure, there is provided a system for reporting a timing advance report, including a communication device of the third aspect and a communication device of the fourth aspect, or a communication device of the fifth aspect and a communication device of the sixth aspect, or a communication device of the seventh aspect and a communication device of the eighth aspect, or a communication device of the ninth aspect and a communication device of the tenth aspect.

According to a twelfth aspect of embodiments of the present disclosure, there is provided a computer-readable storage medium configured to store instructions for a terminal device as described above that, when executed, cause the terminal device to perform the method of the first aspect described above.

According to a thirteenth aspect of embodiments of the present disclosure, there is provided a readable storage medium configured to store stored instructions for a network side device as described above that, when executed, cause the network side device to perform the method of the second aspect described above.

According to a fourteenth aspect of embodiments of the present disclosure, there is provided a computer program product including a computer program that, when run on a computer, causes the computer to perform the method of the first aspect described above.

According to a fifteenth aspect of embodiments of the present disclosure, there is provided a computer program product including a computer program that, when run on a computer, causes the computer to perform the method of the second aspect described above.

According to a sixteenth aspect of embodiments of the present disclosure, there is provided a chip system including at least one processor and an interface, for supporting a terminal device to implement functions involved in the first aspect, for example, determining or processing at least one of data and information involved in the above method. In a possible design, the chip system further includes a memory configured to store computer programs and data necessary for a terminal device. The chip system may be comprised of chips, or may include chips and other discrete devices.

According to a seventeenth aspect of embodiments of the present disclosure, there is provided a chip system including at least one processor and an interface, for supporting a network side device to implement functions involved in the second aspect, for example, determining or processing at least one of data and information involved in the above method. In a possible design, the chip system further includes a memory configured to store computer programs and data necessary for the network side device. The chip system may be comprised of chips, or may include chips and other discrete devices.

According to an eighteenth aspect of embodiments of the present disclosure, there is provided a computer program that, when run on a computer, causes the computer to perform the method of the first aspect described above.

According to a nineteenth aspect of embodiments of the present disclosure, there is provided a computer program that, when run on a computer, causes the computer to perform the method of the second aspect described above.

### BRIEF DESCRIPTION OF THE DRAWINGS

In order to more clearly illustrate embodiments of the present disclosure or the technical solutions in the background, the following description will be given to the accompanying drawings, which are required to be used in embodiments of the present disclosure or the background.
FIG. 1 is a schematic diagram illustrating an NTN communication mode provided by an embodiment of the present disclosure;
FIG. 2 is a schematic diagram illustrating another NTN communication mode provided by an embodiment of the present disclosure;
FIG. 3 is a schematic diagram illustrating yet another NTN communication mode provided by an embodiment of the present disclosure;
FIG. 4 is an architectural diagram illustrating a communication system provided by an embodiment of the present disclosure;
FIG. 5 is a flow chart illustrating a method for reporting a timing advance report provided by an embodiment of the present disclosure;
FIG. 6 is a flow chart illustrating another method for reporting a timing advance report provided by an embodiment of the present disclosure;
FIG. 7 is a flow chart illustrating yet another method for reporting a timing advance report provided by an embodiment of the present disclosure;
FIG. 8 is a flow chart illustrating yet another method for reporting a timing advance report provided by an embodiment of the present disclosure;
FIG. 9 is a flow chart illustrating yet another method for reporting a timing advance report provided by an embodiment of the present disclosure;
FIG. 10 is a flow chart illustrating yet another method for reporting a timing advance report provided by an embodiment of the present disclosure;
FIG. 11 is a flow chart illustrating yet another method for reporting a timing advance report provided by an embodiment of the present disclosure;
FIG. 12 is a flow chart illustrating yet another method for reporting a timing advance report provided by an embodiment of the present disclosure;
FIG. 13 is a flow chart illustrating yet another method for reporting a timing advance report provided by an embodiment of the present disclosure;
FIG. 14 is a flow chart illustrating yet another method for reporting a timing advance report provided by an embodiment of the present disclosure;
FIG. 15 is a flow chart illustrating yet another method for reporting a timing advance report provided by an embodiment of the present disclosure;
FIG. 16 is a flow chart illustrating yet another method for reporting a timing advance report provided by an embodiment of the present disclosure;
FIG. 17 is a flow chart illustrating yet another method for reporting a timing advance report provided by an embodiment of the present disclosure;
FIG. 18 is a flow chart illustrating yet another method for reporting a timing advance report provided by an embodiment of the present disclosure;
FIG. 19 is a flow chart illustrating yet another method for reporting a timing advance report provided by an embodiment of the present disclosure;
FIG. 20 is a flow chart illustrating yet another method for reporting a timing advance report provided by an embodiment of the present disclosure;
FIG. 21 is a structural diagram illustrating a communication device provided by an embodiment of the present disclosure;
FIG. 22 is a structural diagram illustrating another communication device provided by an embodiment of the present disclosure; and
FIG. 23 is a structural diagram illustrating a chip provided by an embodiment of the present disclosure.

### DETAILED DESCRIPTION

To facilitate an understanding of the present disclosure, a brief description of some concepts related to embodiments of the present disclosure is presented herein.

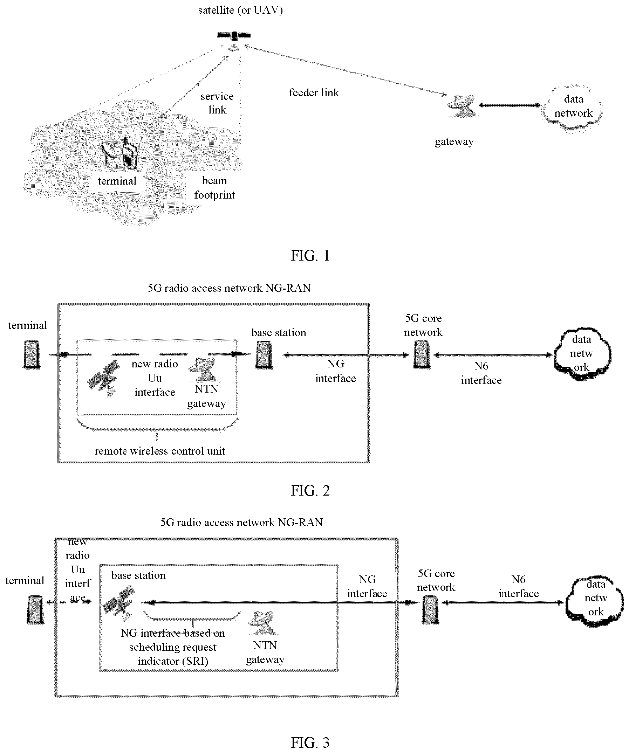

1. A Non-terrestrial network (NTN) communication way is shown in FIG. 1.

NTN communication may be divided into a transparent payload mode and a regenerative payload mode depending on how the satellite processes the signal.

The transparent payload mode is as shown in FIG. 2. An NTN ground station sends a base station signal to a satellite. The satellite converts the signal to a satellite frequency band and then downlinks the signal to a terminal (a terminal device) via the satellite frequency band. Except for frequency conversion and signal amplification, the satellite does not demodulate the base station signal.

The regenerative payload mode is shown in FIG. 3. After the NTN ground station sends the base station signal to the satellite, the satellite firstly demodulates and decodes the signal, then re-encodes and modulates the signal, and sends the regenerated signal via the satellite frequency band.

Table 1 below gives satellite altitude, orbit, satellite coverage for a typical NTN network:

**Table 1**

| Platforms | Altitude range | Orbit | Typical beam projection size |
|---|---|---|---|
| Low orbit satellite | 300-1500km | Earth circular orbit | 100-1000km |
| Medium orbit satellite | 7000-25000km | | 100-1000km |
| High orbit satellite | 35786km | Maintain the same pitch angle relative to the ground station | 200-3500km |
| High Altitude Platform (including HAPS) | 8-50km (HAPS is 20km) | | 5-200km |
| Near-high orbit satellite | 400-50000km | Earth elliptical orbit | 200-3500km |

In order to better understand a method and an apparatus for reporting a timing advance report disclosed in embodiments of the present disclosure, a communication system to which embodiments of the present disclosure are applicable will be described below.

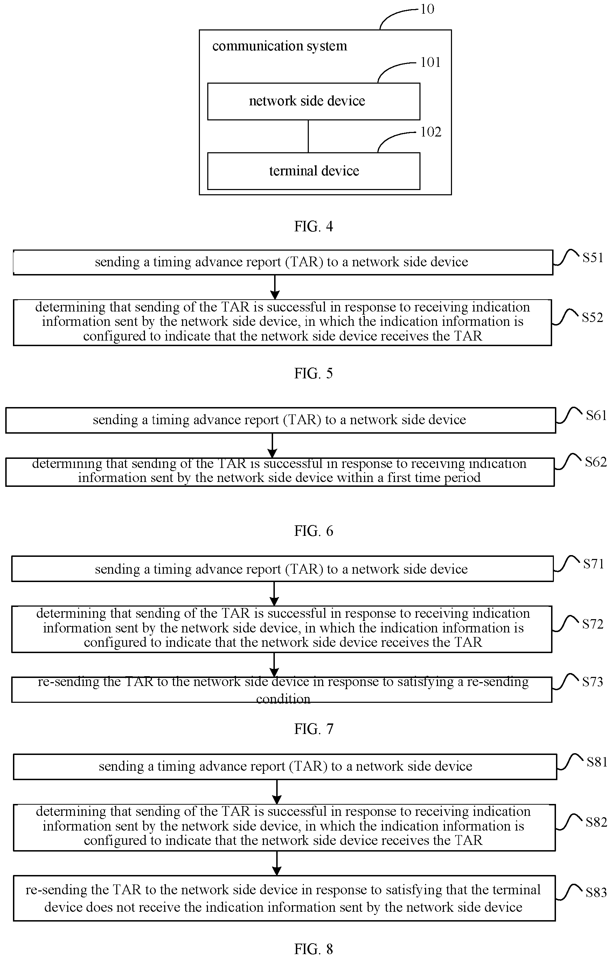

Referring to FIG. 4, FIG. 4 is an architectural diagram illustrating a communication system provided by an embodiment of the present disclosure. The communication system may include, but is not limited to, a network side device and a terminal device. The number and form of devices shown in FIG. 4 are merely for example and do not constitute a limitation of embodiments of the present disclosure. In practical applications, two or more network side devices and two or more terminal devices may be included. For example, the communication system 10 shown in FIG. 4 includes a network side device 101 and a terminal device 102.

It should be noted that the technical solutions of embodiments of the present disclosure may be applied to various communication systems. For example: a long term evolution (LTE) system, a 5th generation (5G) mobile communication system, a 5G new radio (NR) system, or other future new mobile communication systems and the like. It should also be noted that a side link in embodiments of the present disclosure may also be called a sidelink or a direct link.

The network side device 101 in embodiments of the present disclosure is an entity on a network side for transmitting or receiving signals. For example, the network side device 101 may be an evolved NodeB (eNB), a transmission reception point (TRP), a next generation NodeB (gNB) in an NR system, a base station in other future mobile communication systems, or an access node in a wireless fidelity (WiFi) system and the like. The specific technology and specific device form adopted by the base station are not limited in the embodiments of the present disclosure. The base station provided by embodiments of the present disclosure may be composed of a central unit (CU) and a distributed unit (DU), in which the CU may also be referred to as a control unit. A protocol layer of the base station using a CU-DU structure, such as the base station, may be split, with the functions of some protocol layers being placed in the CU for centralized control, and the functions of the remaining part or all of the protocol layers being distributed in the DU, and the DU is controlled centrally by the CU.

The terminal device 102 in embodiments of the present disclosure is an entity on a user side for receiving or transmitting signals, such as a mobile phone. The terminal device may also be referred to as a terminal, a user equipment (UE), a mobile station (MS), a mobile terminal (MT) and the like. The terminal device may be an automobile with a communication function, a smart automobile, a mobile phone, a wearable device, a Pad, a computer with a wireless transceiving function, a virtual reality (VR) terminal device, an augmented reality (AR) terminal device, a wireless terminal device in industrial control, and a wireless terminal device in self-driving, a wireless terminal device in remote medical surgery, a wireless terminal device in smart grid, a wireless terminal device in transportation safety, a wireless terminal device in smart city, a wireless terminal device in smart home and the like. The specific technology and specific device form adopted by the terminal are not limited in the embodiments of the present disclosure.

It may be understood that the communication system described in embodiments of the present disclosure is for a purpose of more clearly illustrating the technical solution of embodiments of the present disclosure, which does not constitute a limitation on the technical solutions provided by embodiments of the present disclosure. Moreover, it is known by those skilled in the art that the technical solutions provided by embodiments of the present disclosure are also applicable to similar technical problems with the evolution of the system architecture and the emergence of new business scenarios.

A method and an apparatus for reporting a timing advance report provided by the present disclosure will be described in detail with reference to the accompanying drawings.

Referring to FIG. 5, FIG. 5 is a flow chart illustrating a method for reporting a timing advance report provided by an embodiment of the present disclosure.

As shown in FIG. 5, the method is performed by a terminal device. The method may include but is not limited to the following steps.

In step S51, the timing advance report (TAR) is sent to a network side device.

In embodiments of the present disclosure, LTE/NR NTN both support the TAR, and the terminal device supports reporting of the TAR (timing advance report) to the network side device in various situations.

For example, in a case where the terminal device is in initial access (such as connection establishment/resume/re-establishment) and a preconfigured uplink resource (PUR)/early data transmission (EDT) procedure of the LTE, and in a case where the network side device indicates the terminal device to report the TAR via a system message, the terminal device will report the TAR in the initial access/PUR/EDT procedure.

For example, for a terminal device in a connected state, in a case where a trigger threshold of the TAR is configured by the network side device, and the terminal device does not report the TAR or after the trigger threshold of the TAR is satisfied, the terminal device triggers reporting of the TAR.

For example, for the terminal device in the connected state, in a case where the terminal device receives a handover command and the TAR is indicated in the handover command, the terminal device triggers the reporting of the TAR.

The main purpose of the reporting of the TAR is to let the network side device know the RTT of the terminal device to the network side device, such that the network side device may determine an uplink scheduling timing or an uplink ACK/NACK feedback timing based on the RTT.

In the relevant art, the terminal device reports the TAR, but may not determine whether it is reported successfully. In a case where the reporting is unsuccessful, the network side device may not obtain the RTT of the terminal device, and only the worst RTT may be assumed for scheduling. There will be a scheduling delay in a case where the network side device determines the uplink scheduling timing or the uplink ACK/NACK feedback timing based on the RTT.

The condition for reporting of the TAR based on a trigger threshold is to judge whether the change between a current TA value and a previously reported TA reaches a certain threshold before triggering the reporting of the TAR. However, the terminal device does not know whether the reporting of the previous TAR is successful, and in a case where it is unsuccessful, and the change of the TA also never satisfies the threshold, the terminal device will never report the TA value, which results in that the network side device may not obtain the TA of the terminal device, thus directly affecting the scheduling delay on the network side device, because the network side device may only assume the worst RTT for scheduling.

Similarly, for a TAR triggered by other reasons, such as initial access, entering the connected state is configured with the reporting of the TAR, and the TA of the terminal device may not be obtained by the network side device in a case where the reporting is unsuccessful.

Based on the above reasons, the terminal device needs to be able to determine whether the reporting of the TAR is successful, and if not, the terminal device performs a certain retransmission.

In step S52, it is determined that sending of the TAR is successful in response to receiving indication information sent by the network side device, in which the indication information is configured to indicate that the network side device receives the TAR.

In embodiments of the present disclosure, after sending the timing advance report (TAR) to the network side device, the terminal device may predetermine whether the sending of the TAR is successful, that is, determining whether the network side device receives the TAR reported by the terminal device, in which it may be determined that the sending of the TAR is successful in a case where it is determined that the indication information sent by the network side device is received. Therefore, the terminal device may determine whether the sending of the TAR is successful, thereby avoiding the occurrence of the scheduling delay on the network side device.

In some embodiments, the indication information includes at least one of:
a media access control-control element (MAC CE) confirming the TAR;
a physical downlink control channel (PDCCH) confirming the TAR;
a differential Koffset MAC CE;
a new transmission scheduling for a hybrid automatic repeat request (HARQ) process for sending the TAR;
a radio resource control (RRC) message determining the TRA;
an acknowledgement (ACK) of a packet data convergence protocol (PDCP) protocol data unit (PDU) in a same media access control (MAC) PDU as the TAR; or
an ACK of a radio link control (RCL) PDU in a same MAC PDU as the TAR.

In embodiments of the present disclosure, the terminal device sends the timing advance report (TAR) to the network side device; and it is determined that the sending of the TAR is successful in the case of receiving the indication information sent by the network side device, in which the indication information is the MAC CE (media access control element) confirming the TAR.

In embodiments of the present disclosure, the terminal device sends the timing advance report (TAR) to the network side device; and it is determined that the sending of the TAR is successful in the case of receiving the indication information sent by the network side device, in which the indication information is the PDCCH (physical downlink control channel) confirming the TAR.

In embodiments of the present disclosure, the terminal device sends the timing advance report (TAR) to the network side device; and it is determined that the sending of the TAR is successful in the case of receiving the indication information sent by the network side device, in which the indication information is the differential Koffset MAC CE.

In embodiments of the present disclosure, the terminal device sends the timing advance report (TAR) to the network side device; and it is determined that the sending of the TAR is successful in the case of receiving the indication information sent by the network side device, in which the indication information is the new transmission scheduling for the HARQ (hybrid automatic repeat request) process for sending the TAR.

In embodiments of the present disclosure, the terminal device sends the timing advance report (TAR) to the network side device; and it is determined that the sending of the TAR is successful in the case of receiving the indication information sent by the network side device, in which the indication information is the RRC (radio resource control) message determining the TRA.

In embodiments of the present disclosure, the terminal device sends the timing advance report (TAR) to the network side device; and it is determined that the sending of the TAR is successful in the case of receiving the indication information sent by the network side device, in which the indication information is the acknowledge (ACK) of the PDCP (packet data convergence protocol) PDU (protocol data unit) in the same MAC (media access control) PDU as the TAR.

In embodiments of the present disclosure, the terminal device sends the timing advance report (TAR) to the network side device; and it is determined that the sending of the TAR is successful in the case of receiving the indication information sent by the network side device, in which the indication information is the ACK of the RCL (radio link control) PDU in the same MAC PDU as the TAR.

It should be noted that above embodiments are not exhaustive and are merely illustrative of some embodiments. Above embodiments may be implemented individually or in combination. Above embodiments are merely illustrative and do not specifically limit the scope of embodiments of the present disclosure.

By implementing embodiments of the present disclosure, the terminal device sends the timing advance report (TAR) to the network side device; it is determined that the sending of the TAR is successful in response to receiving the indication information sent by the network side device, in which the indication information is configured to indicate that the network side device receives the TAR. Therefore, the terminal device may determine whether the sending of the TAR is successful, thereby avoiding the scheduling delay on the network side device.

Referring to FIG. 6, FIG. 6 is a flow chart illustrating another method for reporting a timing advance report provided by an embodiment of the present disclosure.

As shown in FIG. 6, the method is performed by a terminal device. The method may include but is not limited to the following steps.

In step S61, the timing advance report (TAR) is sent to a network side device.

In embodiments of the present disclosure, the relevant description of S61 may refer to the relevant description in above embodiments, and will not be described again here.

In step S62, it is determined that sending of the TAR is successful in response to receiving indication information sent by the network side device within a first time period.

The indication information has the same meaning as the indication information in above embodiments, and reference is made to the relevant description of above embodiments, which will not be described again here.

In embodiments of the present disclosure, after sending the timing advance report (TAR) to the network side device, the terminal device may predetermine whether the sending of the TAR is successful, that is, determining whether the network side device receives the TAR reported by the terminal device, in which it may be determined that the sending of the TAR is successful in a case where it is determined that the indication information sent by the network side device is received within the first time period. Therefore, the terminal device may determine whether the sending of the TAR is successful, thereby avoiding the occurrence of the scheduling delay on the network side device.

The first time period may be determined according to a protocol agreement, or may be determined according to indication of the network side device and the like, which is not specifically limited by embodiments of the present disclosure.

In some embodiments, the first time period is determined by at least one of:
a system message sent by the network side device; or
a RRC message sent by the network side device.

In embodiments of the present disclosure, the terminal device may determine the first time period based on the system message sent by the network side device.

In embodiments of the present disclosure, the terminal device may determine the first time period based on the RRC message sent by the network side device.

In embodiments of the present disclosure, the terminal device may receive the system message or the RRC (radio resource control) message sent by the network side device to determine the first time period.

The system message of the network side device in an LTE may be a system information block(SIB)31, an SIB1, or an SIB2 and the like. The system message of the network side device in an NR may further be an SIB19 or an SIB1. The RRC message may be a connection reconfiguration message (including a handover command), or a connection establishment message, or a connection reestablishment message, or a connection resume message, or a connection release message and the like.

By implementing embodiments of the present disclosure, the terminal device sends the timing advance report (TAR) to the network side device; it is determined that the sending of the TAR is successful in response to receiving the indication information sent by the network side device within the first time period, in which the indication information is configured to indicate that the network side device receives the TAR. Therefore, the terminal device may determine whether the sending of the TAR is successful, thereby avoiding the scheduling delay on the network side device.

Referring to FIG. 7, FIG. 7 is a flow chart illustrating yet another method for reporting a timing advance report provided by an embodiment of the present disclosure.

As shown in FIG. 7, the method is performed by a terminal device. The method may include but is not limited to the following steps.

In step S71, the timing advance report (TAR) is sent to a network side device.

In step S72, it is determined that sending of the TAR is successful in response to receiving indication information sent by the network side device, in which the indication information is configured to indicate that the network side device receives the TAR.

In embodiments of the present disclosure, the relevant descriptions of S71 and S72 may refer to the relevant descriptions in above embodiments, and will not be described again here.

In step S73, the TAR is re-sent to the network side device in response to satisfying a re-sending condition.

In embodiments of the present disclosure, after the terminal device sends the TAR to the network side device, it may be determined whether the re-sending condition is satisfied, and the TAR is re-sent to the network side device in a case where the re-sending condition is satisfied.

The re-sending condition may be that the terminal device reaches a preset time after sending the TAR, or that the times of the terminal device re-sending do not reach a specified times, or based on an indication of the network side device and the like.

In a case where the terminal device determines whether the re-sending condition is satisfied, the terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the indication information sent by the network side device is not received, it is determined that the sending is unsuccessful. In a case where it is determined that the re-sending condition is satisfied, the TAR is re-sent to the network side device.

The indication information has the same meaning as the indication information in above embodiments, and reference is made to the relevant description of above embodiments, which will not be described again here.

By implementing embodiments of the present disclosure, the terminal device sends the timing advance report (TAR) to the network side device; it is determined that the sending of the TAR is successful in response to receiving the indication information sent by the network side device within the first time period, in which the indication information is configured to indicate that the network side device receives the TAR; the TAR is re-sent to the network side device in response to satisfying the re-sending condition. Therefore, the terminal device may determine whether the sending of the TAR is successful, and may re-send the TAR to the network side device in response to satisfying the re-sending condition, thereby avoiding the scheduling delay on the network side device.

Referring to FIG. 8, FIG. 8 is a flow chart illustrating yet another method for reporting a timing advance report provided by an embodiment of the present disclosure.

As shown in FIG. 8, the method is performed by a terminal device. The method may include but is not limited to the following steps.

In step S81, the timing advance report (TAR) is sent to a network side device.

In step S82, it is determined that sending of the TAR is successful in response to receiving indication information sent by the network side device, in which the indication information is configured to indicate that the network side device receives the TAR.

In embodiments of the present disclosure, the relevant descriptions of S81 and S82 may refer to the relevant descriptions in above embodiments, and will not be described again here.

In step S83, the TAR is re-sent to the network side device in response to satisfying that the terminal device does not receive the indication information sent by the network side device.

In embodiments of the present disclosure, it may be determined whether a re-sending condition is satisfied after the terminal device sends the TAR to the network side device, and the TAR is re-sent to the network side device in a case where the re-sending condition is satisfied.

The re-sending condition may be that the terminal device does not receive the indication information sent by the network side device. The indication information has the same meaning as the indication information in above embodiments, and reference is made to the relevant description of above embodiments, which will not be described again here.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the indication information sent by the network side device is not received, it is determined that the sending is unsuccessful. In a case where it is determined that the re-sending condition is satisfied, the TAR is re-sent to the network side device.

By implementing embodiments of the present disclosure, the terminal device sends the timing advance report (TAR) to the network side device; it is determined that the sending of the TAR is successful in response to receiving the indication information sent by the network side device within the first time period, in which the indication information is configured to indicate that the network side device receives the TAR; the TAR is re-sent to the network side device in response to satisfying that the terminal device does not receive the indication information sent by the network side device. Therefore, the terminal device may determine whether the sending of the TAR is successful, and may re-send the TAR to the network side device in the case where the re-sending condition is satisfied, thereby avoiding the scheduling delay on the network side device.

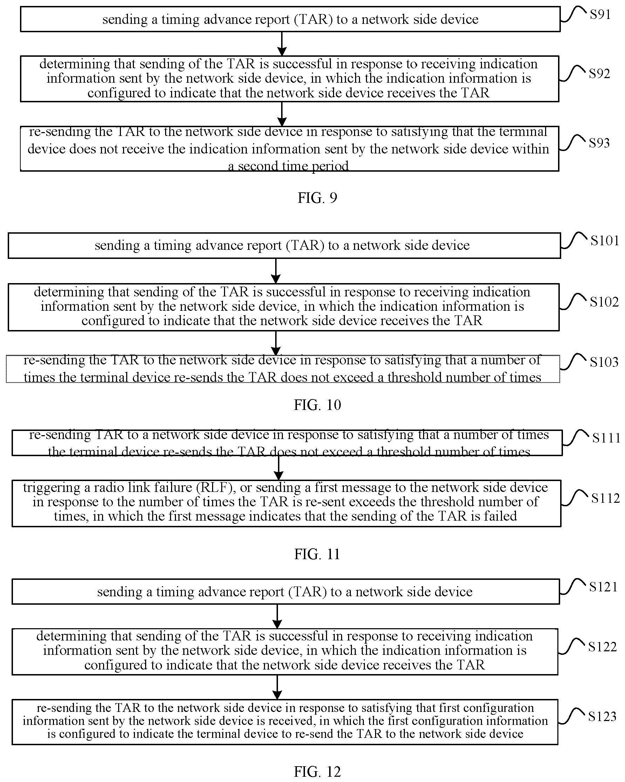

Referring to FIG. 9, FIG. 9 is a flow chart illustrating yet another method for reporting a timing advance report provided by an embodiment of the present disclosure.

As shown in FIG. 9, the method is performed by a terminal device. The method may include but is not limited to the following steps.

In step S91, the timing advance report (TAR) is sent to a network side device.

In step S92, it is determined that sending of the TAR is successful in response to receiving indication information sent by the network side device, in which the indication information is configured to indicate that the network side device receives the TAR.

In embodiments of the present disclosure, the relevant descriptions of S91 and S92 may refer to the relevant descriptions in above embodiments, and will not be described again here.

In step S93, the TAR is re-sent to the network side device in response to satisfying that the terminal device does not receive the indication information sent by the network side device within a second time period.

In embodiments of the present disclosure, after the terminal device sends the TAR to the network side device, it may be judged whether a re-sending condition is satisfied, and the TAR is re-sent to the network side device in a case where the re-sending condition is satisfied.

The re-sending condition may be that the terminal device does not receive the indication information sent by the network side device within the second time period. The indication information has the same meaning as the indication information in above embodiments, and reference is made to the relevant description of above embodiments, which will not be described again here.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the indication information sent by the network side device is not received within the second time period, it is determined that the sending of the TAR is unsuccessful. In a case where it is determined that the re-sending condition is satisfied, the TAR is re-sent to the network side device.

In some embodiments, the second time period is determined by at least one of:
a system message sent by the network side device; or
a RRC message sent by the network side device.

In embodiments of the present disclosure, the terminal device may determine the second time period based on the system message sent by the network side device.

In embodiments of the present disclosure, the terminal device may determine the second time period based on the RRC message sent by the network side device.

In embodiments of the present disclosure, the terminal device may receive the system message or the RRC (radio resource control) message sent by the network side device to determine the second time period.

The system message of the network side device in an LTE may be a system information block(SIB)31, an SIB1, or an SIB2 and the like. The system message of the network side device in an NR may also be an SIB19 or an SIB1. The RRC message may be a connection reconfiguration message (including a handover command), or a connection establishment message, or a connection reestablishment message, or a connection resume message, or a connection release message and the like.

In some embodiments, the second time period is determined based on a timer, in which a timing duration of the timer is equal to the second time period.

In embodiments of the present disclosure, the terminal device may determine the second time period based on the timer, in which the timing duration of the timer is the second time period. The timer may be a new timer, or an existing timer may be reused. In a case where the timing duration is the second time period and a condition that the terminal device does not receive the indication information sent by the network side device within the second time period and re-sends the TAR to the network side device is satisfied, the timer may be set as needed.

In some embodiments, a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of physical uplink shared channel (PUSCH) transmission carrying the TAR sent by the terminal device plus a round trip time (RTT).

In embodiments of the present disclosure, the starting time of the timer is the first symbol after the end of the first transmission in the transmission bundle of the PUSCH (physical uplink shared channel) transmission carrying the TAR sent by the terminal device.

In embodiments of the present disclosure, the starting time of the timer is the first symbol after the end of the first transmission in the transmission bundle of the physical uplink shared channel (PUSCH) transmission carrying the TAR sent by the terminal device plus the round trip time (RTT).

In some embodiments, the terminal device receives third configuration information sent by the network side device, in which the third configuration information is configured to indicate the timer.

In embodiments of the present disclosure, the timer may be determined according to an indication of the network side device, in which the terminal device receives the third configuration information sent by the network side device, and the third configuration information is configured to indicate the timer.

In some embodiments, the terminal device sends third capability indication information to the network side device, in which the third capability indication information is configured to indicate that the terminal device supports the timer.

In embodiments of the present disclosure, the terminal device may send the third capability indication information to the network side device in advance, in which the third capability indication information is configured to indicate that the terminal device supports the timer. In this case, the network side device sends the third configuration information to the terminal device to configure the timer for the terminal device.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the TAR is re-sent to the network side device in response to satisfying that the terminal device does not receive the indication information sent by the network side device within the second time period. Therefore, the terminal device may determine whether the sending of the TAR is successful, and may re-send the TAR to the network side device in the case where the re-sending condition is satisfied, thereby avoiding the scheduling delay on the network side device.

Referring to FIG. 10, FIG. 10 is a flow chart illustrating yet another method for reporting a timing advance report provided by an embodiment of the present disclosure.

As shown in FIG. 10, the method is performed by a terminal device. The method may include but is not limited to the following steps.

In step S101, the timing advance report (TAR) is sent to a network side device.

In step S102, it is determined that sending of the TAR is successful in response to receiving indication information sent by the network side device, in which the indication information is configured to indicate that the network side device receives the TAR.

In embodiments of the present disclosure, the relevant descriptions of S101 and S102 may refer to the relevant descriptions in above embodiments, and will not be described again here.

In step S103, the TAR is re-sent to the network side device in response to satisfying that times of the terminal device re-sending the TAR do not exceed a threshold.

In embodiments of the present disclosure, after the terminal device sends the TAR to the network side device, it may be determined whether a re-sending condition is satisfied, and the TAR is re-sent to the network side device in a case where the re-sending condition is satisfied.

The re-sending condition may be that the times of the terminal device re-sending the TAR do not exceed the threshold.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the times of the TAR re-sent do not exceed the threshold, it is determined that the sending is unsuccessful. In a case where it is determined that the re-sending condition is satisfied, the TAR is re-sent to the network side device.

In some embodiments, the threshold is determined by at least one of:
a system message sent by the network side device; or
a RRC message sent by the network side device.

In embodiments of the present disclosure, the terminal device may determine the threshold based on the system message sent by the network side device.

In embodiments of the present disclosure, the terminal device may determine the threshold based on the RRC message sent by the network side device.

In embodiments of the present disclosure, the terminal device may receive the system message or the RRC (radio resource control) message sent by the network side device to determine the threshold.

The system message of the network side device in an LTE may be a system information block(SIB)31, an SIB1, or an SIB2 and the like. The system message of the network side device in an NR may further be an SIB19 or an SIB1. The RRC message may be a connection reconfiguration message (including a handover command), or a connection establishment message, or a connection reestablishment message, or a connection resume message, or a connection release message and the like.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the TAR is re-sent to the network side device in response to satisfying that the times of the terminal device re-sending the TAR do not exceed the threshold. Therefore, the terminal device may determine whether the sending of the TAR is successful, and may re-send the TAR to the network side device in the case where the re-sending condition is satisfied, thereby avoiding the scheduling delay on the network side device.

Referring to FIG. 11, FIG. 11 is a flow chart illustrating yet another method for reporting a timing advance report provided by an embodiment of the present disclosure.

As shown in FIG. 11, the method is performed by a terminal device. The method may include but is not limited to the following steps.

In step S111, the TAR is re-sent to a network side device in response to satisfying that times of the terminal device re-sending the TAR do not exceed a threshold.

In embodiments of the present disclosure, the terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that a re-sending condition is not satisfied, and the times of the TAR re-sent do not exceed the threshold, it is determined that the sending is unsuccessful. In a case where it is determined that the re-sending condition is satisfied, the TAR is re-sent to the network side device.

The method for determining the threshold is the same as the method for determining the threshold in above embodiments, and reference may be made to the relevant description of above embodiments, which will not be described again here.

In step S112, a radio link failure (RLF) is triggered, or a first message is sent to the network side device in response to the times of the TAR re-sent exceed the threshold, in which the first message indicates that the sending of the TAR is failed.

In embodiments of the present disclosure, the terminal device triggers the RLF (radio link failure) in a case where it is determined that the times of the TAR re-sent exceeds the threshold.

In embodiments of the present disclosure, the terminal device sends the first message to the network side device in the case where it is determined that the times of the TAR re-sent exceeds the threshold, in which the first message indicates that the sending of the TAR is failed.

It should be noted that, in embodiments of the present disclosure, the steps S111 and S112 may be implemented alone or in combination with any other steps in embodiments of the present disclosure, for example, the steps S111 and S112 may be implemented in combination with the steps S31 and S32 and/or S41 and S42 and/or S51 and S52 and/or S61 and S62 and/or S71 to S73 and/or S81 to S83 and/or S91 to S93 and/or S101 to S103 in embodiments of the present disclosure, which are not limited in embodiments of the present disclosure.

Referring to FIG. 12, FIG. 12 is a flow chart illustrating yet another method for reporting a timing advance report provided by an embodiment of the present disclosure.

As shown in FIG. 12, the method is performed by a terminal device. The method may include but is not limited to the following steps.

In step S121, the timing advance report (TAR) is sent to a network side device.

In step S 122, it is determined that sending of the TAR is successful in response to receiving indication information sent by the network side device, in which the indication information is configured to indicate that the network side device receives the TAR.

In embodiments of the present disclosure, the relevant descriptions of S121 and S122 may refer to the relevant descriptions in above embodiments, and will not be described again here.

In step S123, the TAR is re-sent to the network side device in response to satisfying that first configuration information sent by the network side device is received, in which the first configuration information is configured to indicate the terminal device to re-send the TAR to the network side device.

In embodiments of the present disclosure, after the terminal device sends the TAR to the network side device, it may be judged whether a re-sending condition is satisfied, and the TAR is re-sent to the network side device in a case where the re-sending condition is satisfied.

The re-sending condition may be that the terminal device receives the first configuration information sent by the network side device.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the first configuration information sent by the network side device is received, it is determined that the sending is unsuccessful. In a case where it is determined that the re-sending condition is satisfied, the TAR is re-sent to the network side device.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; and the TAR is re-sent to the network side device in response to satisfying that the first configuration information sent by the network side device is received. Therefore, the terminal device may determine whether the sending of the TAR is successful, and may re-send the TAR to the network side device in the case where the re-sending condition is satisfied, thereby avoiding the scheduling delay on the network side device.

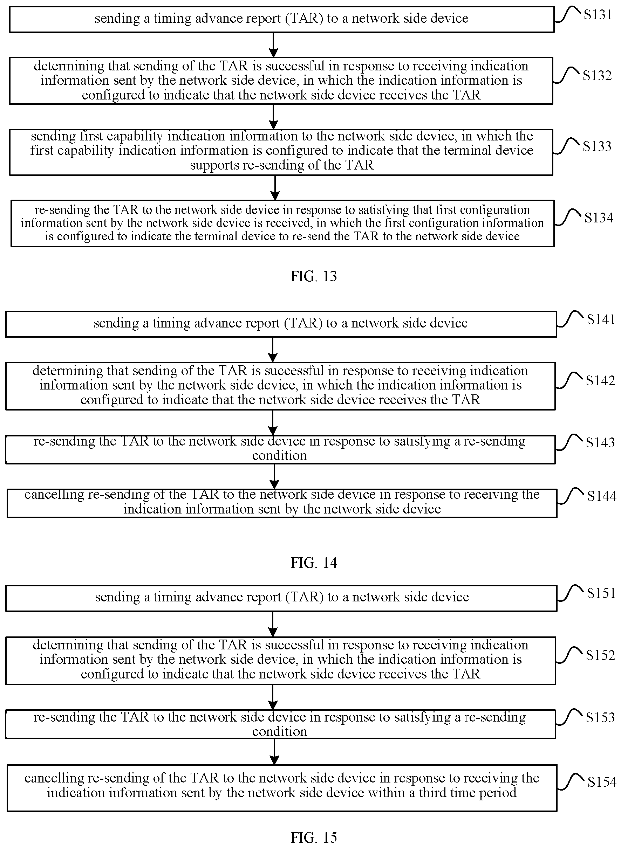

Referring to FIG. 13, FIG. 13 is a flow chart illustrating yet another method for reporting a timing advance report provided by an embodiment of the present disclosure.

As shown in FIG. 13, the method is performed by a terminal device. The method may include but is not limited to the following steps.

In step S131, the timing advance report (TAR) is sent to a network side device.

In step S132, it is determined that sending of the TAR is successful in response to receiving indication information sent by the network side device, in which the indication information is configured to indicate that the network side device receives the TAR.

In embodiments of the present disclosure, the relevant descriptions of S131 and S132 may refer to the relevant descriptions in above embodiments, and will not be described again here.

In step S133, first capability indication information is sent to the network side device, in which the first capability indication information is configured to indicate that the terminal device supports re-sending of the TAR.

In embodiments of the present disclosure, the terminal device may send the first capability indication information to the network side device in advance, and the first capability indication information is configured to indicate that the terminal device supports the re-sending of the TAR to inform the network side device that it may repeat the TAR.

In step S134, the TAR is re-sent to the network side device in response to satisfying that first configuration information sent by the network side device is received, in which the first configuration information is configured to indicate the terminal device to re-send the TAR to the network side device.

In embodiments of the present disclosure, after the terminal device sends the TAR to the network side device and in a case where the re-sending of the TAR is supported, the terminal device may send the first capability indication information to the network side device to report that it supports the re-sending of the TAR, and further determine whether the re-sending condition is satisfied. The TAR is re-sent to the network side device in the case where the re-sending condition is satisfied.

The re-sending condition may be that the terminal device receives the first configuration information sent by the network side device.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the first configuration information sent by the network side device is received, it is determined that the sending is unsuccessful. In a case where it is determined that the re-sending condition is satisfied, the TAR is re-sent to the network side device.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the first capability indication information is sent to the network side device, in which the first capability indication information is configured to indicate that the terminal device supports the re-sending of the TAR; the TAR is re-sent to the network side device in response to satisfying that first configuration information sent by the network side device is received. Therefore, the terminal device may determine whether the sending of the TAR is successful, and may re-send the TAR to the network side device in the case where the re-sending condition is satisfied, thereby avoiding the scheduling delay on the network side device.

Referring to FIG. 14, FIG. 14 is a flow chart illustrating yet another method for reporting a timing advance report provided by an embodiment of the present disclosure.

As shown in FIG. 14 the method is performed by a terminal device. The method may include but is not limited to the following steps.

In step S141, the timing advance report (TAR) is sent to a network side device.

In step S142, it is determined that sending of the TAR is successful in response to receiving indication information sent by the network side device, in which the indication information is configured to indicate that the network side device receives the TAR.

In step S143, the TAR is re-sent to the network side device in response to satisfying a re-sending condition.

In embodiments of the present disclosure, the relevant descriptions of S141 to S143 may refer to the relevant descriptions in above embodiments, and will not be described again here.

In step S144, re-sending of the TAR to the network side device is cancelled in response to receiving the indication information sent by the network side device.

In embodiments of the present disclosure, the terminal device may cancel the re-sending of the TAR to the network side device based on the indication information sent by the network side device, and e.g., cancels the re-sending of the TAR to the network side device in a case of receiving the indication information sent by the network side device.

The indication information has the same meaning as the indication information in above embodiments, and reference is made to the relevant description of above embodiments, which will not be described again here.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the TAR is re-sent to the network side device in response to satisfying a re-sending condition; the re-sending of the TAR to the network side device is cancelled in response to receiving the indication information sent by the network side device. Therefore, the terminal device may determine whether the sending of the TAR is successful, and may re-send the TAR to the network side device in the case where the re-sending condition is satisfied, thereby avoiding the scheduling delay on the network side device. Furthermore, the terminal device cancels the re-sending of the TAR to the network side device in a case where the indication information sent by the network side device is received, thereby avoiding repeated sending to save the power consumption of the terminal device.

Referring to FIG. 15, FIG. 15 is a flow chart illustrating yet another method for reporting a timing advance report provided by an embodiment of the present disclosure.

As shown in FIG. 15, the method is performed by a terminal device. The method may include but is not limited to the following steps.

In step S151, the timing advance report (TAR) is sent to a network side device.

In step S152, it is determined that sending of the TAR is successful in response to receiving indication information sent by the network side device, in which the indication information is configured to indicate that the network side device receives the TAR.

In step S153, the TAR is re-sent to the network side device in response to satisfying a re-sending condition.

In embodiments of the present disclosure, the relevant descriptions of S151 to S153 may refer to the relevant descriptions in above embodiments, and will not be described again here.

In step S154, re-sending of the TAR to the network side device is cancelled in response to receiving the indication information sent by the network side device within a third time period.

In embodiments of the present disclosure, the terminal device may cancel the re-sending of the TAR to the network side device based on the indication information sent by the network side device, and e.g., cancels the re-sending of the TAR to the network side device in a case of receiving the indication information sent by the network side device within a third time period.

The indication information has the same meaning as the indication information in above embodiments, and reference is made to the relevant description of above embodiments, which will not be described again here.

In some embodiments, the third time period is determined by at least one of:
a system message sent by the network side device; or
a RRC message sent by the network side device.

In embodiments of the present disclosure, the terminal device may determine the third time period based on the system message sent by the network side device.

In embodiments of the present disclosure, the terminal device may determine the third time period based on the RRC message sent by the network side device.

In embodiments of the present disclosure, the terminal device may receive the system message or the RRC (radio resource control) message sent by the network side device to determine the third time period.

The system message of the network side device in an LTE may be a system information block(SIB)31, an SIB1, or an SIB2 and the like. The system message of the network side device in an NR may further be an SIB19 or an SIB1. The RRC message may be a connection reconfiguration message (including a handover command), or a connection establishment message, or a connection reestablishment message, or a connection resume message, or a connection release message and the like.

In some embodiments, the third time period is determined based on a timer, in which a timing duration of the timer is equal to the third time period.

In embodiments of the present disclosure, the terminal device may determine the third time period based on the timer, in which the timing duration of the timer is the third time period. The timer may be a new timer, or an existing timer may be reused. In a case where the timing duration is the third time period and a condition that the terminal device cancels re-sending of the TAR to the network side device in response to receiving the indication information sent by the network side device within the third time period is satisfied, the timer may be set as needed.

In some embodiments, a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of the physical uplink shared channel (PUSCH) transmission carrying the TAR sent by the terminal device plus a round trip time (RTT).

In embodiments of the present disclosure, the starting time of the timer is the first symbol after the end of the first transmission in the transmission bundle of the PUSCH (physical uplink shared channel) transmission carrying the TAR sent by the terminal device.

In embodiments of the present disclosure, the starting time of the timer is the first symbol after the end of the first transmission in the transmission bundle of the physical uplink shared channel (PUSCH) transmission carrying the TAR sent by the terminal device plus the round trip time (RTT).

In some embodiments, the terminal device receives third configuration information sent by the network side device, in which the third configuration information is configured to indicate the timer.

In embodiments of the present disclosure, the timer may be determined according to an indication of the network side device, in which the terminal device receives the third configuration information sent by the network side device, and the third configuration information is configured to indicate the timer.

In some embodiments, the terminal device sends third capability indication information to the network side device, in which the third capability indication information is configured to indicate that the terminal device supports the timer.

In embodiments of the present disclosure, the terminal device may send the third capability indication information to the network side device in advance, in which the third capability indication information is configured to indicate that the terminal device supports the timer. In this case, the network side device sends the third configuration information to the terminal device to configure the timer for the terminal device.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the TAR is re-sent to the network side device in response to satisfying a re-sending condition; the re-sending of the TAR to the network side device is cancelled in response to receiving the indication information sent by the network side device within the third time period. Therefore, the terminal device may determine whether the sending of the TAR is successful, and may re-send the TAR to the network side device in the case where the re-sending condition is satisfied, thereby avoiding the scheduling delay on the network side device. Furthermore, the terminal device cancels the re-sending of the TAR to the network side device in a case where the indication information sent by the network side device is received, thereby avoiding repeated sending to save the power consumption of the terminal device.

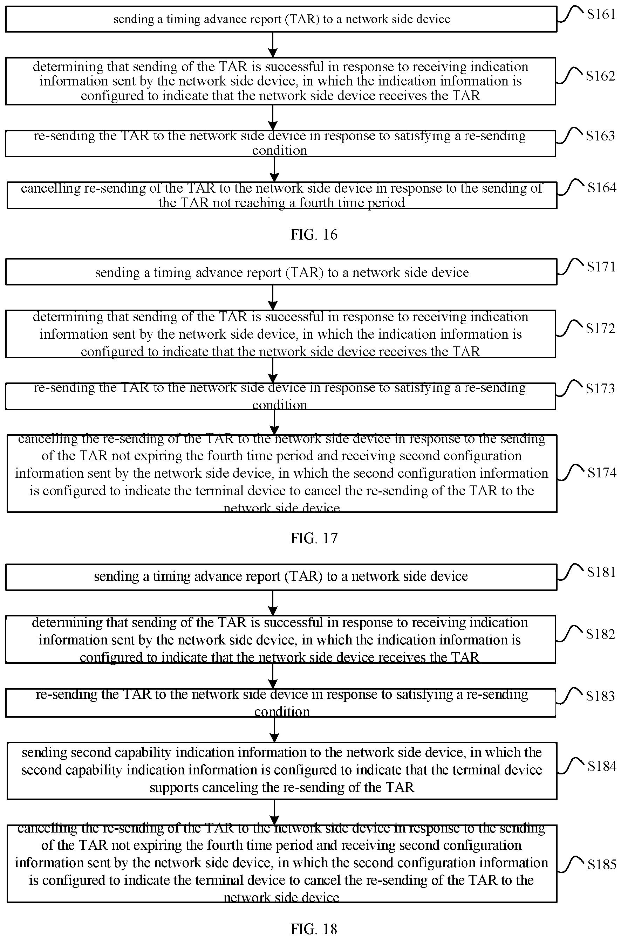

Referring to FIG. 16, FIG. 16 is a flow chart illustrating yet another method for reporting a timing advance report provided by an embodiment of the present disclosure.

As shown in FIG. 16, the method is performed by a terminal device. The method may include but is not limited to the following steps.

In step S161, the timing advance report (TAR) is sent to a network side device.

In step S162, it is determined that sending of the TAR is successful in response to receiving indication information sent by the network side device, in which the indication information is configured to indicate that the network side device receives the TAR.

In step S163, the TAR is re-sent to the network side device in response to satisfying a re-sending condition.

In embodiments of the present disclosure, the relevant descriptions of S161 to S163 may refer to the relevant descriptions in above embodiments, and will not be described again here.

In step S164, re-sending of the TAR to the network side device is cancelled in response to the sending of the TAR not expiring a fourth time period.

In embodiments of the present disclosure, the terminal device may judge whether the sending of the TAR expires the fourth time period, and cancels the re-sending of the TAR to the network side device in a case where the sending of the TAR does not expire the fourth time period.

In some embodiments, the fourth time period is determined by at least one of:
a system message sent by the network side device; or
a RRC message sent by the network side device.

In embodiments of the present disclosure, the terminal device may determine the fourth time period based on the system message sent by the network side device.

In embodiments of the present disclosure, the terminal device may determine the fourth time period based on the RRC message sent by the network side device.

In embodiments of the present disclosure, the terminal device may receive the system message or the RRC (radio resource control) message sent by the network side device to determine the fourth time period.

The system message of the network side device in an LTE may be a system information block(SIB)31, an SIB1, or an SIB2 and the like. The system message of the network side device in an NR may further be an SIB19 or an SIB1. The RRC message may be a connection reconfiguration message (including a handover command), or a connection establishment message, or a connection reestablishment message, or a connection resume message, or a connection release message and the like.

In some embodiments, the fourth time period is determined based on a timer, in which a timing duration of the timer is equal to the fourth time period.

In embodiments of the present disclosure, the terminal device may determine the fourth time period based on the timer, in which the timing duration of the timer is the fourth time period. The timer may be a new timer, or an existing timer may be reused. In a case where the timing duration is the fourth time period and a condition that the re-sending of the TAR to the network side device is cancelled in response to the sending of the TAR not expiring the fourth time period is satisfied, the timer may be set as needed.

In some embodiments, a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of the physical uplink shared channel (PUSCH) transmission carrying the TAR sent by the terminal device plus a round trip time (RTT).

In embodiments of the present disclosure, the starting time of the timer is the first symbol after the end of the first transmission in the transmission bundle of the PUSCH (physical uplink shared channel) transmission carrying the TAR sent by the terminal device.

In embodiments of the present disclosure, the starting time of the timer is the first symbol after the end of the first transmission in the transmission bundle of the physical uplink shared channel (PUSCH) transmission carrying the TAR sent by the terminal device plus the round trip time (RTT).

In some embodiments, the terminal device receives third configuration information sent by the network side device, in which the third configuration information is configured to indicate the timer.

In embodiments of the present disclosure, the timer may be determined according to an indication of the network side device, in which the terminal device receives the third configuration information sent by the network side device, and the third configuration information is configured to indicate the timer.

In some embodiments, the terminal device sends third capability indication information to the network side device, in which the third capability indication information is configured to indicate that the terminal device supports the timer.

In embodiments of the present disclosure, the terminal device may send the third capability indication information to the network side device in advance, in which the third capability indication information is configured to indicate that the terminal device supports the timer. In this case, the network side device sends the third configuration information to the terminal device to configure the timer for the terminal device.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the re-sending of the TAR to the network side device is cancelled in response to the sending of the TAR not expiring the fourth time period. Therefore, the terminal device may determine whether the sending of the TAR is successful, and may re-send the TAR to the network side device in the case where the re-sending condition is satisfied, thereby avoiding the scheduling delay on the network side device. Furthermore, the terminal device cancels the re-sending of the TAR to the network side device in response to the sending of the TAR not expiring the fourth time period, thereby avoiding repeated sending to save the power consumption of the terminal device.

Referring to FIG. 17, FIG. 17 is a flow chart illustrating yet another method for reporting a timing advance report provided by an embodiment of the present disclosure.

As shown in FIG. 17, the method is performed by a terminal device. The method may include but is not limited to the following steps.

In step S171, the timing advance report (TAR) is sent to a network side device.

In step S172, it is determined that sending of the TAR is successful in response to receiving indication information sent by the network side device, in which the indication information is configured to indicate that the network side device receives the TAR.

In step S173, the TAR is re-sent to the network side device in response to satisfying a re-sending condition.

In embodiments of the present disclosure, the relevant descriptions of S171 to S173 may refer to the relevant descriptions in above embodiments, and will not be described again here.

In step S174, the re-sending of the TAR to the network side device is cancelled in response to the sending of the TAR not expiring the fourth time period and receiving second configuration information sent by the network side device, in which the second configuration information is configured to indicate the terminal device to cancel the re-sending of the TAR to the network side device.

In embodiments of the present disclosure, the terminal device may judge whether the sending of the TAR expires the fourth time period, and cancel the re-sending of the TAR to the network side device in a case where the sending of the TAR does not expire the fourth time period and the second configuration information sent by the network side device is received, the second configuration information being configured to indicate the terminal device to cancel the re-sending of the TAR to the network side device.

In embodiments of the present disclosure, the method for determining the fourth time period is the same as the method for determining the fourth time period in above embodiments, and reference is made to the relevant description of above embodiments, which will not be described again here.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the TAR is re-sent to the network side device in response to satisfying a re-sending condition; the re-sending of the TAR to the network side device is cancelled in response to the sending of the TAR not expiring the fourth time period and receiving the second configuration information sent by the network side device, in which the second configuration information is configured to indicate the terminal device to cancel the re-sending of the TAR to the network side device. Therefore, the terminal device may determine whether the sending of the TAR is successful, and may re-send the TAR to the network side device in the case where the re-sending condition is satisfied, thereby avoiding the scheduling delay on the network side device. Furthermore, the terminal device cancels the re-sending of the TAR to the network side device in a case where the sending of the TAR does not expire the fourth time period and the second configuration information sent by the network side device is received, thereby avoiding repeated sending to save the power consumption of the terminal device.

Referring to FIG. 18, FIG. 18 is a flow chart illustrating yet another method for reporting a timing advance report provided by an embodiment of the present disclosure.

As shown in FIG. 18, the method is performed by a terminal device. The method may include but is not limited to the following steps.

In step S181, the timing advance report (TAR) is sent to a network side device.

In step S182, it is determined that sending of the TAR is successful in response to receiving indication information sent by the network side device, in which the indication information is configured to indicate that the network side device receives the TAR.

In step S183, the TAR is re-sent to the network side device in response to satisfying a re-sending condition.

In embodiments of the present disclosure, the relevant descriptions of S181 to S183 may refer to the relevant descriptions in above embodiments, and will not be described again here.

In step S184, second capability indication information is sent to the network side device, in which the second capability indication information is configured to indicate that the terminal device supports canceling the re-sending of the TAR.

In embodiments of the present disclosure, the terminal device supports reporting capability information that supports canceling the re-sending of the TAR to the network side device, in which the second capability indication information may be reported to the network side device, and the second capability indication information is configured to indicate that the terminal device supports canceling the re-sending of the TAR.

In step S185, the re-sending of the TAR to the network side device is cancelled in response to the sending of the TAR not expiring the fourth time period and receiving second configuration information sent by the network side device, in which the second configuration information is configured to indicate the terminal device to cancel the re-sending of the TAR to the network side device.

In embodiments of the present disclosure, the terminal device may judge whether the sending of the TAR expires the fourth time period, and cancels the re-sending of the TAR to the network side device in a case where the sending of the TAR does not expire the fourth time period and the second configuration information sent by the network side device is received, the second configuration information being configured to indicate the terminal device to cancel the re-sending of the TAR to the network side device.

In embodiments of the present disclosure, the method for determining the fourth time period is the same as the method for determining the fourth time period in above embodiments, and reference is made to the relevant description of above embodiments, which will not be described again here.

By implementing embodiments of the present disclosure, the terminal device sends the timing advance report (TAR) to the network side device; it is determined that the sending of the TAR is successful in response to receiving the indication information sent by the network side device within a first time period, in which the indication information is configured to indicate that the network side device receives the TAR; the TAR is re-sent to the network side device in response to satisfying a re-sending condition; the second capability indication information is sent to the network side device, in which the second capability indication information is configured to indicate that the terminal device supports canceling the re-sending of the TAR; the re-sending of the TAR to the network side device is cancelled in response to the sending of the TAR not expiring the fourth time period and receiving the second configuration information sent by the network side device, in which the second configuration information is configured to indicate the terminal device to cancel the re-sending of the TAR to the network side device. Therefore, the terminal device may determine whether the sending of the TAR is successful, and may re-send the TAR to the network side device in the case where the re-sending condition is satisfied, thereby avoiding the scheduling delay on the network side device. Furthermore, the terminal device cancels the re-sending of the TAR to the network side device in a case where the sending of the TAR does not expire the fourth time period and the second configuration information sent by the network side device is received, thereby avoiding repeated sending to save the power consumption of the terminal device.

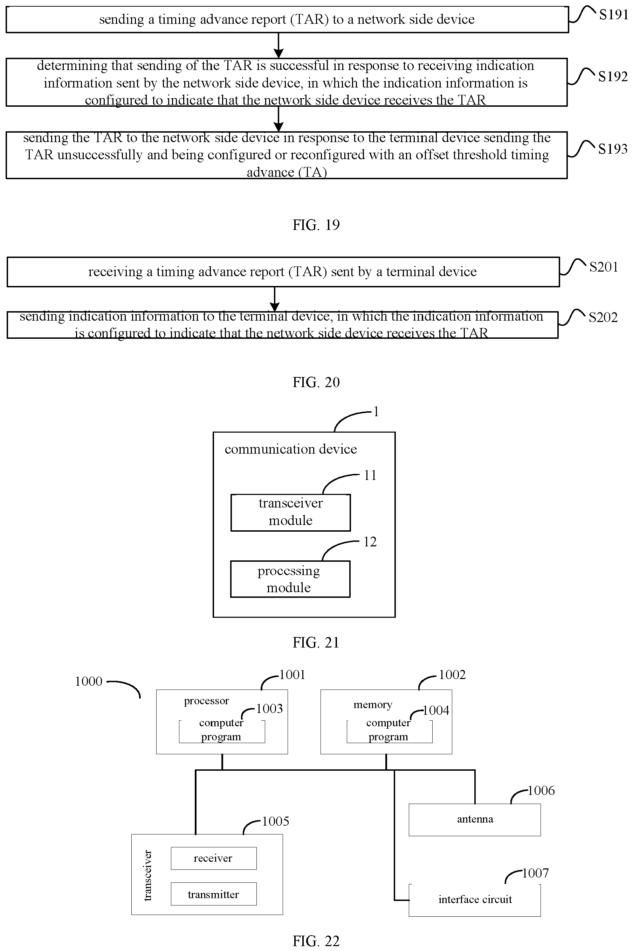

Referring to FIG. 19, FIG. 19 is a flow chart illustrating yet another method for reporting a timing advance report provided by an embodiment of the present disclosure.

As shown in FIG. 19, the method is performed by a terminal device. The method may include but is not limited to the following steps.

In step S191, the timing advance report (TAR) is sent to a network side device.

In step S192, it is determined that sending of the TAR is successful in response to receiving indication information sent by the network side device, in which the indication information is configured to indicate that the network side device receives the TAR.

In embodiments of the present disclosure, the relevant descriptions of S191 and S192 may refer to the relevant descriptions in above embodiments, and will not be described again here.

In step S193, the TAR is sent to the network side device in response to the terminal device sending the TAR unsuccessfully and being configured or reconfigured with an offset threshold timing advance (TA).

In embodiments of the present disclosure, after sending the TAR to the network side device, the terminal device may judge whether the sending of the TAR is successful, and determine that the sending of the TAR is successful in a case where the indication information sent by the network side device is received, and send the TAR to the network side device in a case where it is determined that the sending of the TAR is unsuccessful and the offset threshold timing advance (TA) is configured or reconfigured.

By implementing embodiments of the present disclosure, the terminal device sends the timing advance report (TAR) to the network side device; it is determined that the sending of the TAR is successful in a case where the indication information sent by the network side device is received, and the TAR is sent to the network side device in a case where it is determined that the sending of the TAR is unsuccessful and the offset threshold timing advance (TA) is configured or reconfigured. Therefore, the terminal device may determine whether the sending of the TAR is successful, thereby avoiding the scheduling delay on the network side device.

It should be noted that above embodiments are not exhaustive and are merely illustrative of some embodiments. Above embodiments may be implemented individually or in combination. Above embodiments are merely illustrative and do not specifically limit the scope of embodiments of the present disclosure.

Referring to FIG. 20, FIG. 20 is a flow chart illustrating a method for reporting a timing advance report provided by an embodiment of the present disclosure.

As shown in FIG. 20, the method is performed by a network side device. The method may include but is not limited to the following steps.

In step S201, the timing advance report (TAR) sent by a terminal device is received.

In embodiments of the present disclosure, LTE/NR NTN both support the TAR, and the terminal device supports reporting of the TAR (timing advance report) to the network side device in various situations.

For example, in a case where the terminal device is in initial access (such as connection establishment/resume/re-establishment) and a preconfigured uplink resource (PUR)/early data transmission (EDT) procedure of the LTE, and in a case where the network side device indicates the terminal device to report the TAR via a system message, the terminal device will report the TAR in the initial access/PUR/EDT procedure.

For example, for a terminal device in a connected state, in a case where a trigger threshold of the TAR is configured by the network side device, and the terminal device does not report the TAR or after the trigger threshold of the TAR is satisfied, the terminal device triggers reporting of the TAR.

For example, for the terminal device in the connected state, in a case where the terminal device receives a handover command and the TAR is indicated in the handover command, the terminal device triggers the reporting of the TAR.

The main purpose of the reporting of the TAR is to let the network side device know the RTT of the terminal device to the network side device, such that the network side device may determine an uplink scheduling timing or an uplink ACK/NACK feedback timing based on the RTT.

In the relevant art, the terminal device reports the TAR, but may not determine whether it is reported successfully. In a case where the reporting of the TAR is unsuccessful, the network side device may not obtain the RTT of the terminal device, and only the worst RTT may be assumed for scheduling. There will be a scheduling delay in a case where the network side device determines the uplink scheduling timing or the uplink ACK/NACK feedback timing based on the RTT.

The condition for the reporting of the TAR based on the trigger threshold is to judge whether the change between a current TA value and a previously reported TA reaches a certain threshold before triggering the reporting of the TAR. However, the terminal device does not know whether the reporting of the previous TAR is successful, and in a case where it is unsuccessful, and the change of the TA also never satisfies the threshold, the terminal device will never report the TA value, which results in that the network side device may not obtain the TA of the terminal device, thus directly affecting the scheduling delay on the network side device, because the network side device may only assume the worst RTT for scheduling.

Similarly, for a TAR triggered by other reasons, such as initial access, entering the connected state is configured with the reporting of the TAR, and the TA of the terminal device may not be obtained by the network side device in a case where the reporting is unsuccessful.

Based on the above reasons, the terminal device needs to be able to determine whether the reporting of the TAR is successful, and if not, the terminal device performs a certain retransmission.

In step S202, indication information is sent to the terminal device, in which the indication information is configured to indicate that the network side device receives the TAR.

In embodiments of the present disclosure, after receiving the timing advance report (TAR) sent by the terminal device, the network side device may send the indication information to the terminal device to indicate to the terminal device that the network side device has received the TAR. The terminal device may predetermine whether the sending of the TAR is successful, that is, determining whether the network side device receives the TAR reported by the terminal device, in which it may be determined that the sending of the TAR is successful in a case where it is determined that the indication information sent by the network side device is received. Therefore, the terminal device may determine whether the sending of the TAR is successful, thereby avoiding the occurrence of the scheduling delay on the network side device.

In some embodiments, the indication information includes at least one of:
a media access control-control element (MAC CE) confirming the TAR;
a physical downlink control channel (PDCCH) confirming the TAR;
a differential Koffset MAC CE;
a new transmission scheduling for a hybrid automatic repeat request (HARQ) process for sending the TAR;
a radio resource control (RRC) message determining the TRA;
an acknowledgement (ACK) of a packet data convergence protocol (PDCP) protocol data unit (PDU) in a same media access control (MAC) PDU as the TAR; or
an ACK of a radio link control (RCL) PDU in a same MAC PDU as the TAR.

In embodiments of the present disclosure, the terminal device sends the timing advance report (TAR) to the network side device; and it is determined that the sending of the TAR is successful in the case of receiving the indication information sent by the network side device, in which the indication information is the MAC CE (media access control-control element) confirming the TAR.

In embodiments of the present disclosure, the terminal device sends the timing advance report (TAR) to the network side device; and it is determined that the sending of the TAR is successful in the case of receiving the indication information sent by the network side device, in which the indication information is the PDCCH (physical downlink control channel) confirming the TAR.

In embodiments of the present disclosure, the terminal device sends the timing advance report (TAR) to the network side device; and it is determined that the sending of the TAR is successful in the case of receiving the indication information sent by the network side device, in which the indication information is the differential Koffset MAC CE.

In embodiments of the present disclosure, the terminal device sends the timing advance report (TAR) to the network side device; and it is determined that the sending of the TAR is successful in the case of receiving the indication information sent by the network side device, in which the indication information is the new transmission scheduling for the HARQ (hybrid automatic repeat request) process for sending the TAR.

In embodiments of the present disclosure, the terminal device sends the timing advance report (TAR) to the network side device; and it is determined that the sending of the TAR is successful in the case of receiving the indication information sent by the network side device, in which the indication information is the RRC (radio resource control) message determining the TRA.

In embodiments of the present disclosure, the terminal device sends the timing advance report (TAR) to the network side device; and it is determined that the sending of the TAR is successful in the case of receiving the indication information sent by the network side device, in which the indication information is the acknowledge (ACK) of the PDCP (packet data convergence protocol) PDU (protocol data unit) in the same MAC (media access control) PDU as the TAR.

In embodiments of the present disclosure, the terminal device sends the timing advance report (TAR) to the network side device; and it is determined that the sending of the TAR is successful in the case of receiving the indication information sent by the network side device, in which the indication information is the ACK of the RCL (radio link control) PDU in the same MAC PDU as the TAR.

It should be noted that above embodiments are not exhaustive and are merely illustrative of some embodiments. Above embodiments may be implemented individually or in combination. Above embodiments are merely illustrative and do not specifically limit the scope of embodiments of the present disclosure.

In some embodiments, the network side device sending the indication information to the terminal device includes: the network side device sending the indication information to the terminal device within a first time period.

In embodiments of the present disclosure, the network side device sends the indication information to the terminal device, and the indication information may be sent to the terminal device within the first time period. The terminal device determines that the sending of the TAR is successful in a case where it is determined that the indication information sent by the network side device is received within the first time period. Therefore, the terminal device may determine whether the sending of the TAR is successful, thereby avoiding the occurrence of the scheduling delay on the network side device.

The method for determining the first time period is the same as the method for determining in above embodiments, and reference may be made to the relevant description in above embodiments, which will not be described again here.

In some embodiments, the network side device receives the TAR re-sent by the terminal device in a case where a re-sending condition is satisfied.

In embodiments of the present disclosure, the terminal device may re-send the TAR to the network side device in the case where the re-sending condition is satisfied.

The re-sending condition may be that the terminal device reaches a preset time after sending the TAR, or that times of the terminal device re-sending do not reach a specified times, or based on an indication of the network side device and the like.

In a case where the terminal device determines whether the re-sending condition is satisfied, the terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the indication information sent by the network side device is not received, it is determined that the sending is unsuccessful. In a case where it is determined that the re-sending condition is satisfied, the TAR is re-sent to the network side device.

In some embodiments, the re-sending condition includes that the terminal device does not receive the indication information sent by the network side device.

The re-sending condition may be that the terminal device does not receive the indication information sent by the network side device.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the indication information sent by the network side device is not received, it is determined that the sending is unsuccessful. In a case where it is determined that the re-sending condition is satisfied, the TAR is re-sent to the network side device.

In some embodiments, the re-sending condition includes that the terminal device does not receive the indication information sent by the network side device within a second time period.

The terminal device may prejudge whether the sending of the TAR is successful after sending the TAR to the network side device, in which it is determined that the sending of the TAR is successful in response to receiving the indication information sent by the network side device, and the indication information is configured to indicate that the network side device receives the TAR. In a case where it is determined that the re-sending condition is not satisfied, and the terminal device does not receive the indication information sent by the network side device within the second time period, it is determined that the sending is unsuccessful. In a case where it is determined that the re-sending condition is satisfied, the TAR is re-sent to the network side device.

In some embodiments, the re-sending condition further includes that times of the terminal device re-sending the TAR do not exceed a threshold.

In some embodiments, the network side device receives a first message sent by the terminal device in a case where the times of the TAR re-sent exceed the threshold, in which the first message indicates that the sending of the TAR is failed.

In some embodiments, the re-sending condition further includes receiving first configuration information sent by the network side device, in which the first configuration information is configured to indicate the terminal device to re-send the TAR to the network side device.

In some embodiments, the network side device receives first capability indication information sent by the terminal device, in which the first capability indication information is configured to indicate that the terminal device supports re-sending of the TAR.

In some embodiments, the network side device receives second capability indication information sent by the terminal device, in which the second capability indication information is configured to indicate that the terminal device supports canceling re-sending of the TAR.

The re-sending condition is the same as the method in above embodiments, and reference may be made to the relevant description in above embodiments, which will not be described again here.

In some embodiments, at least one of the first time period, the second time period, and the threshold is determined by at least one of:
a system message sent by the network side device; or
the RRC message sent by the network side device.

The second time period is determined based on a timer, in which a timing duration of the timer is equal to the second time period.

In embodiments of the present disclosure, the terminal device may determine the first time period based on the system message sent by the network side device.

In embodiments of the present disclosure, the terminal device may determine the first time period based on the RRC message sent by the network side device.

In embodiments of the present disclosure, the terminal device may receive the system message or the RRC (radio resource control) message sent by the network side device to determine the first time period.

In embodiments of the present disclosure, the terminal device may determine the second time period based on the system message sent by the network side device.

In embodiments of the present disclosure, the terminal device may determine the second time period based on the RRC message sent by the network side device.

In embodiments of the present disclosure, the terminal device may receive the system message or the RRC (radio resource control) message sent by the network side device to determine the second time period.

In embodiments of the present disclosure, the terminal device may determine the threshold based on the system message sent by the network side device.

In embodiments of the present disclosure, the terminal device may determine the threshold based on the RRC message sent by the network side device.

In embodiments of the present disclosure, the terminal device may receive the system message or the RRC (radio resource control) message sent by the network side device to determine the threshold.

The system message of the network side device in an LTE may be a system information block(SIB)31, an SIB1, or an SIB2 and the like. The system message of the network side device in an NR may further be an SIB19 or an SIB1. The RRC message may be a connection reconfiguration message (including a handover command), or a connection establishment message, or a connection reestablishment message, or a connection resume message, or a connection release message and the like.

In some embodiments, the second time period is determined based on a timer, in which a timing duration of the timer is equal to the second time period.

In embodiments of the present disclosure, the terminal device may determine the second time period based on the timer, in which the timing duration of the timer is the second time period. The timer may be a new timer, or an existing timer may be reused. In a case where the timing duration is the second time period and a condition that the terminal device does not receive the indication information sent by the network side device within the second time period and re-sends the TAR to the network side device is satisfied, the timer may be set as needed.

In some embodiments, a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of the physical uplink shared channel (PUSCH) transmission carrying the TAR sent by the terminal device plus a round trip time (RTT).

In embodiments of the present disclosure, the starting time of the timer is the first symbol after the end of the first transmission in the transmission bundle of the PUSCH (physical uplink shared channel) transmission carrying the TAR sent by the terminal device.

In embodiments of the present disclosure, the starting time of the timer is the first symbol after the end of the first transmission in the transmission bundle of the physical uplink shared channel (PUSCH) transmission carrying the TAR sent by the terminal device plus the round trip time (RTT).

In some embodiments, the network side device sends third configuration information to the terminal device, in which the third configuration information is configured to indicate the timer.

In embodiments of the present disclosure, the timer may be determined according to an indication of the network side device, in which the terminal device receives the third configuration information sent by the network side device, and the third configuration information is configured to indicate the timer.

In some embodiments, the network side device receives third capability indication information sent by the terminal device, in which the third capability indication information is configured to indicate that the terminal device supports the timer.

In embodiments of the present disclosure, the terminal device may send the third capability indication information to the network side device in advance, in which the third capability indication information is configured to indicate that the terminal device supports the timer. In this case, the network side device sends the third configuration information to the terminal device to configure the timer for the terminal device.

In some embodiments, the network side device receives the TAR sent by the terminal device in a case where the terminal device sends the TAR unsuccessfully and is configured or reconfigured with an offset threshold timing advance (TA).

In embodiments of the present disclosure, after sending the TAR to the network side device, the terminal device may judge whether the sending of the TAR is successful, and determines that the sending of the TAR is successful in a case where the indication information sent by the network side device is received, and sends the TAR to the network side device in a case where it is determined that the sending of the TAR is unsuccessful and the offset threshold timing advance (TA) is configured or reconfigured.

By implementing embodiments of the present disclosure, the network side device receives the timing advance report (TAR) sent by the terminal device; and the network side device sends the indication information to the terminal device, in which the indication information is configured to indicate that the network side device receives the TAR. Therefore, the terminal device may determine whether the sending of the TAR is successful, thereby avoiding the scheduling delay on the network side device.

In above embodiments provided in the present disclosure, the method provided by embodiments of the present disclosure is introduced from the perspective of the terminal device and the network side device, respectively. In order to implement the various functions in the method provided by above embodiments of the present disclosure, the network side device and the terminal device may include a hardware structure and a software module to implement the above functions in the form of a hardware structure, a software module, or a hardware structure plus a software module. Any of the above functions may be implemented in the form of a hardware structure, a software module, or a hardware structure plus a software module.

Referring to FIG. 21, FIG. 21 is a structural diagram illustrating a communication device 1 provided by an embodiment of the present disclosure. The communication device 1 shown in FIG. 21 may include a transceiver module 11 and a processing module 12. The transceiver module may include a sending module and/or a receiving module. The sending module is configured to implement a sending function, and the receiving module is configured to implement a receiving function. The transceiver module may implement a sending function and/or a receiving function.

The communication device 1 may be a terminal device, or may be an apparatus in a terminal device, or may be an apparatus that may be matched for use with a terminal device. Alternatively, the communication device 1 may be a network side device, or may be an apparatus in a network side device, or may be an apparatus that may be matched for use with a network side device.

The communication device 1 is a terminal device:
the device includes: a transceiver module 11 and a processing module 12.

The transceiver module is configured to send a timing advance report (TAR) to a network side device.

The processing module is configured to determine that sending of the TAR is successful in response to receiving indication information sent by the network side device, in which the indication information is configured to indicate that the network side device receives the TAR.

In some embodiments, the indication information includes at least one of:
a media access control-control element (MAC CE) confirming the TAR;
a physical downlink control channel (PDCCH) confirming the TAR;
a differential Koffset MAC CE;
a new transmission scheduling for a hybrid automatic repeat request (HARQ) process for sending the TAR;
a radio resource control (RRC) message determining the TRA;
an acknowledgement (ACK) of a packet data convergence protocol (PDCP) protocol data unit (PDU) in a same media access control (MAC) PDU as the TAR; or
an ACK of a radio link control (RCL) PDU in a same MAC PDU as the TAR.

In some embodiments, the processing module 12 is further configured to determine that the sending of the TAR is successful in response to receiving the indication information sent by the network side device within a first time period.

In some embodiments, the processing module 12 is further configured to re-send the TAR to the network side device in response to satisfying a re-sending condition.

In some embodiments, the re-sending condition includes that the terminal device does not receive the indication information sent by the network side device.

In some embodiments, the re-sending condition includes that the terminal device does not receive the indication information sent by the network side device within a second time period.

In some embodiments, the re-sending condition further includes that times of the terminal device re-sending the TAR do not exceed a threshold.

In some embodiments, the processing module 12 is further configured to trigger a radio link failure (RLF), or send a first message to the network side device in response to the times of the TAR re-sent exceed the threshold, in which the first message indicates that the sending of the TAR is failed.

In some embodiments, the re-sending condition further includes receiving first configuration information sent by the network side device, in which the first configuration information is configured to indicate the terminal device to re-send the TAR to the network side device.

In some embodiments, the transceiver module 11 is further configured to send first capability indication information to the network side device, in which the first capability indication information is configured to indicate that the terminal device supports re-sending of the TAR.

In some embodiments, the transceiver module 11 is further configured to cancel re-sending of the TAR to the network side device in response to receiving the indication information sent by the network side device.

In some embodiments, the transceiver module 11 is further configured to cancel re-sending of the TAR to the network side device in response to receiving the indication information sent by the network side device within a third time period.

In some embodiments, the transceiver module 11 is further configured to cancel re-sending of the TAR to the network side device in response to the sending of the TAR not expiring a fourth time period.

In some embodiments, the transceiver module 11 is further configured to cancel the re-sending of the TAR to the network side device in response to the sending of the TAR not expiring the fourth time period and receiving second configuration information sent by the network side device, in which the second configuration information is configured to indicate the terminal device to cancel the re-sending of the TAR to the network side device.

In some embodiments, the transceiver module 11 is further configured to send second capability indication information to the network side device, in which the second capability indication information is configured to indicate that the terminal device supports canceling the re-sending of the TAR.

In some embodiments, at least one of the first time period, the second time period, the threshold, the third time period and the fourth time period is determined by at least one of:
a system message sent by the network side device; or
a RRC message sent by the network side device.

In some embodiments, the processing module 12 is further configured to determine at least one of the second time period, the third time period, and the fourth time period based on a timer, in which a timing duration of the timer is equal to the second time period, or the timing duration of the timer is equal to the third time period, or the timing duration of the timer is equal to the fourth time period.

In some embodiments, a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of the physical uplink shared channel (PUSCH) transmission carrying the TAR sent by the terminal device plus a round trip time (RTT).

In some embodiments, the transceiver module 11 is further configured to receive third configuration information sent by the network side device, in which the third configuration information is configured to indicate the timer.

In some embodiments, the transceiver module 11 is further configured to send third capability indication information to the network side device, in which the third capability indication information is configured to indicate that the terminal device supports the timer.

In some embodiments, the transceiver module 11 is further configured to send the TAR to the network side device in response to the terminal device sending the TAR unsuccessfully and being configured or reconfigured with an offset threshold timing advance (TA).

The communication device 1 is a network side device:
the device includes: a transceiver module 11.

The transceiver module 11 is further configured to receive the timing advance report (TAR) sent by a terminal device.

The transceiver module 11 is further configured to send indication information to the terminal device, in which the indication information is configured to indicate that the network side device receives the TAR.

In some embodiments, the indication information includes at least one of:
a media access control-control element (MAC CE) confirming the TAR;
a physical downlink control channel (PDCCH) confirming the TAR;
a differential Koffset MAC CE;
a new transmission scheduling for a hybrid automatic repeat request (HARQ) process for sending the TAR;
a radio resource control (RRC) message determining the TRA;
an acknowledgement (ACK) of a packet data convergence protocol (PDCP) protocol data unit (PDU) in a same media access control (MAC) PDU as the TAR; or
an ACK of a radio link control (RCL) PDU in a same MAC PDU as the TAR.

In some embodiments, the transceiver module 11 is further configured to send the indication information to the terminal device within a first time period.

In some embodiments, the transceiver module 11 is further configured to receive the TAR re-sent by the terminal device in a case where a re-sending condition is satisfied.

In some embodiments, the re-sending condition includes that the terminal device does not receive the indication information sent by the network side device.

In some embodiments, the re-sending condition includes that the terminal device does not receive the indication information sent by the network side device within a second time period.

In some embodiments, the re-sending condition further includes that times of the terminal device re-sending the TAR do not exceed a threshold.

In some embodiments, the transceiver module 11 is further configured to receive a first message sent by the terminal device in a case where the times of the TAR re-sent exceed the threshold, in which the first message indicates that the sending of the TAR is failed.

In some embodiments, the re-sending condition further includes receiving first configuration information sent by the network side device, in which the first configuration information is configured to indicate the terminal device to re-send the TAR to the network side device.

In some embodiments, the transceiver module 11 is further configured to receive first capability indication information sent by the terminal device, in which the first capability indication information is configured to indicate that the terminal device supports re-sending of the TAR.

In some embodiments, the transceiver module 11 is further configured to receive second capability indication information sent by the terminal device, in which the second capability indication information is configured to indicate that the terminal device supports canceling re-sending of the TAR.

In some embodiments, at least one of the first time period, the second time period, and the threshold is determined by at least one of:
a system message sent by the network side device; or
the RRC message sent by the network side device.

In some embodiments, the processing module 12 is further configured to determine the second time period based on a timer, in which a timing duration of the timer is equal to the second time period.

In some embodiments, a starting time of the timer is at least one of:
a first symbol after an end of first transmission in a transmission bundle of physical uplink shared channel (PUSCH) transmission carrying the TAR sent by the terminal device; or
the terminal device sends the first symbol after the end of the first transmission in the transmission bundle of the physical uplink shared channel (PUSCH) transmission carrying the TAR sent by the terminal device plus a round trip time (RTT).

In some embodiments, the transceiver module 11 is further configured to send third configuration information to the terminal device, in which the third configuration information is configured to indicate the timer.

In some embodiments, the transceiver module 11 is further configured to receive third capability indication information sent by the terminal device, in which the third capability indication information is configured to indicate that the terminal device supports the timer.

Regarding the communication device 1 in above embodiments, the specific manner in which the respective modules perform operations has been described in detail in embodiments of the method, and will not be described in detail herein.

The communication device 1 provided in above embodiments of the present disclosure achieves the same or similar advantageous effects as the method for reporting the timing advance report provided in some of above embodiments, and will not be described in detail herein.

Referring to FIG. 22, FIG. 22 is a structural diagram illustrating another communication device 1000 provided by an embodiment of the present disclosure. The communication device 1000 may be a network side device; a terminal device; a chip, a chip system or a processor supporting the network side device to implement the above-mentioned method; and a chip, a chip system or a processor supporting the terminal device to implement the above-mentioned method. The communication device 1000 may be configured to implement the method as described in method embodiments described above, with particular reference to the description of method embodiments described above.

The communication device 1000 may include one or more processors 1001. The processor 1001 may be a general-purpose processor or a special-purpose processor, etc. It may be, for example, a baseband processor or a central processor. The baseband processor may be configured to process a communication protocol and communication data, and the central processor may be configured to control a communication device (such as a network side device, a baseband chip, a terminal device, a terminal device chip, a DU or a CU, etc.), execute a computer program and process data of the computer program.

Optionally, the communication device 1000 may further include one or more memories 1002 on which the computer program 1004 may be stored, and the memory 1002 executes the computer program 1004 to cause the communication device 1000 to perform the method as described in above method embodiments. Optionally, the memory 1002 may also have the data stored therein. The communication device 1000 and the memory 1002 may be provided independently or integrated together.

Optionally, the communication device 1000 may further include a transceiver 1005 and an antenna 1006. The transceiver 1005 may be referred to as a transceiving unit, a transceiving machine, or a transceiving circuit or the like for implementing a transceiving function. The transceiver 1005 may include a receiver and a transmitter, and the receiver may be referred to as a receiving machine or a receiving circuit or the like for implementing a receiving function; the transmitter may be referred to as a transmitting machine or a transmission circuit or the like for implementing a transmitting function.

Optionally, the communication device 1000 may further include one or more interface circuits 1007. The interface circuit 1007 is configured to receive and transmit the code instructions to the processor 1001. The processor 1001 executes the code instructions to cause the communication device 1000 to perform the method described in above method embodiments.

The communication device 1000 is a terminal device: the transceiver 1005 is configured to execute S51 in FIG. 5; S61 in FIG. 6; S71 and S73 in FIG. 7; S81 and S83 in FIG. 8; S91 and S93 in FIG. 9; S101 and S103 in FIG. 10; S111 and S112 in FIG. 11; S121 and S123 in FIG. 12; S131, S133 and S134 in FIG. 13; S141, S143 and S144 in FIG. 14; S151, S153 and S154 in FIG. 15; S161, S163 and S164 in FIG. 16; S171, S173 and S174 in FIG. 17; S181, S183, S184 and S185 in FIG. 18; S191 and S193 in FIG. 19; the processor 1001 is configured to execute S52 in FIG. 5; S62 in FIG. 6; S72 in FIG. 7; S82 in FIG. 8; S92 in FIG. 9; S102 in FIG. 10; S122 in FIG. 12; S132 in FIG. 13; S142 in FIG. 14; S152 in FIG. 15; S162 in FIG. 16; S172 in FIG. 17; S182 in FIG. 18; S192 in FIG. 19.

The communication device 1000 is a network side device: the transceiver 1005 is configured to execute S201 and S202 in FIG. 20.

In one implementation, the processor 1001 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiving circuit, interface or interface circuit may be configured for transmission or transfer of signal.

In one implementation, the processor 1001 may store the computer program 1003 that, when run on the processor 1001, causes the communication device 1000 to perform the method described in above method embodiments. The computer program 1003 may be solidified in the processor 1001, in which case the processor 1001 may be implemented in hardware.

In one implementation, the communication device 1000 may include a circuit that may implement the functions of transmitting or receiving or communication in foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in above embodiments may be the terminal device, but the scope of the communication device described in the present disclosure is not limited thereto. Moreover, the structure of the communication device may not be limited by FIG. 22. The communication device may be a stand-alone device or may be a part of a larger device. For example, the communication device may be:
(1) a stand-alone integrated circuit (IC), or a chip, or a chip system or a subsystem;
(2) a collection of one or more ICs, optionally the collection of ICs may also include a storage component for storing the data and the computer program;
(3) ASIC such as modem;
(4) a module that may be embedded in other devices;
(5) a receiver, a terminal device, an intelligent terminal device, a cellular phone, a wireless device, a handset, a mobile unit, an on-vehicle device, a network device, a cloud device, an artificial intelligence device, etc.; or
(6) others.

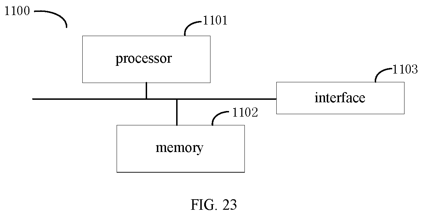

In a case where the communication device may be the chip or the chip system, reference is made to FIG. 23, which is a structural diagram of the chip provided by an embodiment of the present disclosure.

The chip 1100 shown includes a processor 1101 and an interface 1103. There may be one or more processors 1101 and a plurality of interfaces 1103.

Regarding a case where the chip is configured to implement the functions of the network side device in embodiments of the present disclosure:

The interface 1103 is configured to receive code instructions and transmit the code instructions to the processor.

The processor 1101 is configured to execute the code instructions to perform a method for reporting a timing advance report as described in some embodiments above.

Regarding a case where the chip is configured to implement the functions of the terminal device in embodiments of the present disclosure:

The interface 1103 is configured to receive code instructions and transmit the code instructions to the processor.

The processor 1101 is configured to execute the code instructions to perform a method for reporting a timing advance report as described in some embodiments above.

Optionally, the chip 1100 further includes the memory 1102 for storing necessary computer programs and data.

Those skilled in the art may further appreciate that the various illustrative logical blocks and steps described in embodiments of the present disclosure may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be considered to be beyond the scope of protection of embodiments of the present disclosure.

The present disclosure further provides a system for reporting a timing advance report which includes the communication device as a terminal device and the communication device as a network side device in forgoing embodiment of FIG. 20, or which includes the communication device as a terminal device and the communication device as a network side device in forgoing embodiment of FIG. 21.

The present disclosure further provides a readable storage medium having instructions stored thereon that, when executed by the computer, causes the functions of any of the method embodiments described above to be implemented.

The present disclosure also provides a computer program product that, when executed by the computer, causes the functions of any of the method embodiments described above to be implemented.

In above embodiments, the present disclosure may be implemented in whole or in part by the hardware, software, firmware or their combination. When implemented in the software, the present disclosure may be implemented in whole or in part as the computer program product. The computer program product includes one or more computer programs. The computer programs, when loaded and executed on the computer, result in whole or in part in processes or functions according to embodiments of the present disclosure. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present disclosure are merely for convenience of description and are not intended to limit the scope of embodiments of the present disclosure, which also represent a sequential order.

Term "at least one" in the present disclosure may also be described as one or more, and "a plurality of" may be two, three, four, or more, and the present disclosure is not limited thereto. In embodiments of the present disclosure, regarding a type of technical features, the technical features in the type of technical features are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present disclosure may be configured or predefined. Values of information in each table are merely examples, and may be configured as other values, which is not limited in the present disclosure. In a case of configuring the correspondence between the information and each parameter, it is not necessarily required that all the correspondences shown in each table must be configured. For example, the correspondence shown in certain rows in the tables in the present disclosure may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a struct, a class, a heap, or a hash table.

"Predefined" in the present disclosure may be understood as defined, pre-defined, stored, pre-stored, pre-negotiated, pre-configured, solidified, or pre-fired.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present disclosure.

It will be clear to those skilled in the art that, for convenience and brevity of the description, specific working procedures of the above described systems, devices and units may refer to corresponding procedures in the preceding method embodiments and will not be described in detail here.

The above description is only for the specific embodiments of the present disclosure, but the scope of the present disclosure is not limited thereto. Any person skilled in the art may easily think of changes or substitutions within the technical scope of the present disclosure, which shall be covered by the protection scope of the present disclosure. Therefore, the protection scope of the present application shall be in line with the attached claims.

## Claims

1. A method for reporting a timing advance report, performed by a terminal device, comprising:
sending the timing advance report (TAR) to a network side device; and
determining that sending of the TAR is successful in response to receiving indication information sent by the network side device, wherein the indication information is configured to indicate that the network side device receives the TAR.

2. The method according to claim 1, wherein the indication information comprises at least one of:
a media access control-control element (MAC CE) confirming the TAR;
a physical downlink control channel (PDCCH) confirming the TAR;
a differential Koffset MAC CE;
a new transmission scheduling for a hybrid automatic repeat request (HARQ) process for sending the TAR;
a radio resource control (RRC) message determining the TRA;
an acknowledgement (ACK) of a packet data convergence protocol (PDCP) protocol data unit (PDU) in a same media access control (MAC) PDU as the TAR; or
an ACK of a radio link control (RCL) PDU in a same MAC PDU as the TAR.

3. The method according to claim 1 or 2, wherein determining that the sending of the TAR is successful in response to receiving the indication information sent by the network side device comprises:
determining that the sending of the TAR is successful in response to receiving the indication information sent by the network side device within a first time period.

4. The method according to any one of claims 1 to 3, further comprising:
re-sending the TAR to the network side device in response to satisfying a re-sending condition.

5. The method according to claim 4, wherein the re-sending condition comprising:
the terminal device does not receive the indication information sent by the network side device.

6. The method according to claim 4, wherein the re-sending condition comprising:
the terminal device does not receive the indication information sent by the network side device within a second time period.

7. The method according to any one of claims 4 to 6, wherein the re-sending condition further comprising:
times of the terminal device re-sending the TAR do not exceed a threshold.

8. The method according to claim 7, further comprising:
triggering a radio link failure (RLF), or sending a first message to the network side device in response to the times of the TAR re-sent exceed the threshold, wherein the first message indicates that the sending of the TAR is failed.

9. The method according to any one of claims 4 to 8, wherein the re-sending condition further comprises receiving first configuration information sent by the network side device, wherein the first configuration information is configured to indicate the terminal device to re-send the TAR to the network side device.

10. The method according to claim 9, further comprising:
sending first capability indication information to the network side device, wherein the first capability indication information is configured to indicate that the terminal device supports re-sending of the TAR.

11. The method according to any one of claims 4 to 10, further comprising:
canceling re-sending of the TAR to the network side device in response to receiving the indication information sent by the network side device.

12. The method according to claim 11, wherein canceling the re-sending of the TAR to the network side device in response to receiving the indication information sent by the network side device comprises:
canceling re-sending of the TAR to the network side device in response to receiving the indication information sent by the network side device within a third time period.

13. The method according to any one of claims 4 to 12, further comprising:
canceling re-sending of the TAR to the network side device in response to the sending of the TAR not expiring a fourth time period.

14. The method according to claim 13, wherein canceling the re-sending of the TAR to the network side device in response to the sending of the TAR not expiring the fourth time period comprises:
canceling the re-sending of the TAR to the network side device in response to the sending of the TAR not expiring the fourth time period and receiving second configuration information sent by the network side device, wherein the second configuration information is configured to indicate the terminal device to cancel the re-sending of the TAR to the network side device.

15. The method according to claim 14, further comprising:
sending second capability indication information to the network side device, wherein the second capability indication information is configured to indicate that the terminal device supports canceling the re-sending of the TAR.

16. The method according to any one of claims 3 to 15, wherein at least one of the first time period, the second time period, the threshold, the third time period and the fourth time period is determined by at least one of:
a system message sent by the network side device; or
a RRC message sent by the network side device.

17. The method according to claim 6, 12 or 13, further comprising:
determining at least one of the second time period, the third time period, and the fourth time period based on a timer, wherein a timing duration of the timer is equal to the second time period, or the timing duration of the timer is equal to the third time period, or the timing duration of the timer is equal to the fourth time period.

18. The method according to claim 17, wherein a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of the physical uplink shared channel (PUSCH) transmission carrying the TAR sent by the terminal device plus a round trip time (RTT).

19. The method according to claim 17 or 18, further comprising:
receiving third configuration information sent by the network side device, wherein the third configuration information is configured to indicate the timer.

20. The method according to claim 19, further comprising:
sending third capability indication information to the network side device, wherein the third capability indication information is configured to indicate that the terminal device supports the timer.

21. The method according to any one of claims 1 to 20, further comprising:
sending the TAR to the network side device in response to the terminal device sending the TAR unsuccessfully and being configured or reconfigured with an offset threshold timing advance (TA).

22. A method for reporting a timing advance report, performed by a network side device, comprising:
receiving the timing advance report (TAR) sent by a terminal device; and
sending indication information to the terminal device, wherein the indication information is configured to indicate that the network side device receives the TAR.

23. The method according to claim 22, wherein the indication information comprises at least one of:
a media access control-control element (MAC CE) confirming the TAR;
a physical downlink control channel (PDCCH) confirming the TAR;
a differential Koffset MAC CE;
a new transmission scheduling for a hybrid automatic repeat request (HARQ) process for sending the TAR;
a radio resource control (RRC) message determining the TRA;
an acknowledgement (ACK) of a packet data convergence protocol (PDCP) protocol data unit (PDU) in a same media access control (MAC) PDU as the TAR; or
an ACK of a radio link control (RCL) PDU in a same MAC PDU as the TAR.

24. The method according to claim 22 or 23, wherein sending the indication information to the terminal device comprises:
sending the indication information to the terminal device within a first time period.

25. The method according to any one of claims 22 to 24, further comprising:
receiving the TAR re-sent by the terminal device in a case where a re-sending condition is satisfied.

26. The method according to claim 25, wherein the re-sending condition comprises that the terminal device does not receive the indication information sent by the network side device.

27. The method according to claim 25, wherein the re-sending condition comprises that the terminal device does not receive the indication information sent by the network side device within a second time period.

28. The method according to any one of claims 25 to 27, wherein the re-sending condition further comprises that times of the terminal device re-sending the TAR do not exceed a threshold.

29. The method according to claim 28, further comprising:
receiving a first message sent by the terminal device in a case where the times of the TAR re-sent exceed the threshold, wherein the first message indicates that the sending of the TAR is failed.

30. The method according to any one of claims 25 to 29, wherein the re-sending condition further comprises receiving first configuration information sent by the network side device, wherein the first configuration information is configured to indicate the terminal device to re-send the TAR to the network side device.

31. The method according to claim 30, further comprising:
receiving first capability indication information sent by the terminal device, wherein the first capability indication information is configured to indicate that the terminal device supports re-sending of the TAR.

32. The method according to claim 30, further comprising:
receiving second capability indication information sent by the terminal device, wherein the second capability indication information is configured to indicate that the terminal device supports canceling re-sending of the TAR.

33. The method according to any one of claims 24 to 32, wherein at least one of the first time period, the second time period, and the threshold is determined by at least one of:
a system message sent by the network side device; or
an RRC message sent by the network side device.

34. The method according to claim 27, further comprising:
determining the second time period based on a timer, wherein a timing duration of the timer is equal to the second time period.

35. The method according to claim 34, wherein a starting time of the timer is at least one of:
a first symbol after an end of first transmission in a transmission bundle of physical uplink shared channel (PUSCH) transmission carrying the TAR sent by the terminal device; or
the first symbol after the end of the first transmission in the transmission bundle of the physical uplink shared channel (PUSCH) transmission carrying the TAR sent by the terminal device plus a round trip time (RTT).

36. The method according to claim 34 or 35, further comprising:
sending third configuration information to the terminal device, wherein the third configuration information is configured to indicate the timer.

37. The method according to claim 36, further comprising:
receiving third capability indication information sent by the terminal device, wherein the third capability indication information is configured to indicate that the terminal device supports the timer.

38. The method according to any one of claims 22 to 37, further comprising:
receiving the TAR sent by the terminal device in a case where the terminal device sends the TAR unsuccessfully and is configured or reconfigured with an offset threshold timing advance (TA).

39. A communication device, comprising:
a transceiver module configured to send a timing advance report (TAR) to a network side device; and
a processing module configured to determine that the sending of the TAR is successful in response to receiving indication information sent by the network side device, wherein the indication information is configured to indicate that the network side device receives the TAR.

40. A communication device, comprising:
a transceiver module configured to receive a timing advance report (TAR) sent by a terminal device;
wherein the transceiver module is further configured to send indication information to the terminal device, wherein the indication information is configured to indicate that the network side device receives the TAR.

41. A communication device, comprising:
a processor; and
a memory,
wherein the memory is configured to store a computer program, and the processor is configured to execute the computer program stored in the memory to cause the device to perform a method according to any one of claims 1 to 21, or the processor is configured to execute the computer program stored in the memory to cause the device to perform a method according to any one of claims 22 to 38.

42. A communication device, comprising:
a processor; and
an interface circuit,
wherein the interface circuit is configured to receive code instructions and transmit the code instructions to the processor; and
the processor is configured to execute the code instructions to cause the device to perform a method according to any one of claims 1 to 21, or the processor is configured to execute the code instructions to cause the device to perform a method according to any one of claims 22 to 38.

43. A computer-readable storage medium having stored therein instructions that, when executed, cause a method according to any one of claims 1 to 21 to be implemented, or when executed, cause a method according to any one of claims 22 to 38 to be implemented.
